(19) Europäisches Patentamt / European Patent Office / Office européen des brevets

(11) **EP 2 908 286 A1**

(12) # EUROPEAN PATENT APPLICATION

(43) Date of publication:
**19.08.2015 Bulletin 2015/34**

(51) Int Cl.:
***G06T 3/40*** (2006.01)

(21) Application number: **15153753.7**

(22) Date of filing: **04.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.02.2014 JP 2014027534**

(71) Applicant: **Canon Kabushiki Kaisha Tokyo 146-8501 (JP)**

(72) Inventor: **Sasaki, Toru Tokyo,, Tokyo 146-8501 (JP)**

(74) Representative: **TBK Bavariaring 4-6 80336 München (DE)**

(54) **Imaging system, imaging apparatus, and image processing apparatus**

(57)    A imaging apparatus images a plurality of areas of an object such that end portions of adjacent areas overlap each other and generates, for each of the plurality of areas, image data of the area and peripheral data, which is data of an overlapping portion of the area and an area adjacent to the area and lossily compresses the image data. A image processing apparatus acquires the lossily compressed image data and the peripheral data of each of the plurality of areas and determines, using peripheral data of adjacent two areas, a parameter used for stitching image data of the two areas and decodes the lossily compressed image data and stitches the decoded image data of the plurality of areas using the parameter.

FIG.1

**Description**

BACKGROUND OF THE INVENTION

Field of the Invention

The present invention relates to a microscope imaging system having a function of stitching images together.

Description of the Related Art

In recent years, in order to solve problems such as a shortage of pathologists and remote location medical care, importance of diagnosis performed using pathological specimen images is increasing. The pathological specimen images are acquired by a microscope including an electric stage or a medical slide scanner (hereinafter referred to as microscope imaging system). However, it is necessary to overcome a large number of technical problems in order to acquire highly accurate images fit for diagnosis.

As one of the technical problems, a problem concerning stitching of images is known. A range of a specimen that can be imaged by an objective lens of a digital microscope is small compared with the entire specimen and is usually equal to or smaller than one hundredths of the entire specimen. Therefore, to image the entire specimen, it is necessary to capture a plurality of images in different positions and stitch the images together.

In general, a plurality of image data are acquired by repeating imaging while moving a specimen at a fixed interval at a time using an electric stage (image data acquired by one imaging is referred to as "tile"). In this case, positional deviation is caused by backlash of the stage or the like and an image is affected by the positional deviation. As a result, when tiles are simply arranged, a difference occurs in stitches. Image data representing the entire specimen (hereinafter, "entire image") is not obtained. Therefore, in general, tiles are acquired such that peripheral sections of tiles adjacent to each other overlap. An entire image is formed after positional deviation correction is performed to match the shapes of overlapping places. Correction of distortion aberration of an objective lens, rotation of an image, and the like is also performed.

When a large number of tiles are stitched together, positional deviation cannot be estimated from only tiles located in the vicinity. It is necessary to retain a large number of tiles equivalent to a wide range and perform positional deviation estimation. This method is known as global registration. To create an overall image of a pathological specimen, when a general configuration (a 1/1.8-inch image sensor and a x20-magnification objective lens) is used, 20,000 or more tiles are necessary. In order to retain and process such a large number of tiles, a microscope imaging system needs to include a memory and a hard disk having large storage capacities and accessible at high speed and a CPU capable of executing positional deviation amount estimation processing with a large calculation load. However, an increase in a hardware size is not desirable from the viewpoint of the size and costs of an apparatus.

A microscope imaging system disclosed in Japanese Translation of PCT Application No. 2008-511899 (WO2006/028439) images image stripes (laterally long sections acquired by a line sensor while moving a stage) in order and performs positional deviation estimation at timing when adjacent image stripes are obtained. The image stripe is equivalent to a region having size equal to or larger than 100 times of a tile acquired by an image sensor. When compared with a microscope imaging system including the image sensor, the number of stitches substantially decreases. It is unnecessary to carry out the global registration. As a result, hardware of the microscope imaging system is kept small.

In a scanner apparatus other than the microscope imaging system, it is likely that a hardware size in the apparatus increase for stitching execution. A hand scanner disclosed in Japanese Patent Application Laid-open No. H11-73494 (US6259826B1) is an apparatus that moves a main body on paper and acquires, with a line sensor mounted on the main body, image information described on the paper. Since the hand scanner is held and moved by a hand, the apparatus main body needs to be formed as small as possible. The hand scanner sets data obtained by scanning a fixed section as one tile and transmits tiles to a PC after compressing the tiles. The hand scanner adds position data of the hand scanner to the tiles and sends the position data. The PC stitches the tiles on the basis of the position data. Usually, a transfer rate of data communication performed between the scanner apparatus and the PC is low. However, since the tiles are compressed and sent, it is unnecessary to store the tiles in the scanner apparatus. Stitching with a large calculation load is executed on the PC to realize a small hardware configuration.

Positional deviation estimation processing performed in the stitching is also used in image high definition processing performed using a plurality of images. As in the apparatus that uses the stitching, it is likely an increase in a hardware size is involved. An image processing apparatus disclosed in Japanese Patent Application Laid-open No. 2009-048487 aligns compressed high-resolution partial images and sticks the high-resolution partial images to a low-resolution entire image to generate a high definition image. The images are stored and communicated in a compressed state before being increased in definition to keep a hardware size of a memory and the like small.

Before explanation of problems, terms concerning an apparatus configuration are defined. A microscope imaging system needs to perform processing ranging from light processing with a small calculation load such as noise correction processing to heavy processing such as stitching, on image data imaged by an image sensor. In the following explanation, a microscope imaging system configured by two apparatuses (respectively referred to as an imaging apparatus and an image processing apparatus), which share processing. The imaging apparatus performs image data acquisition by the image sensor and relatively light processing such as sensor noise correction. The image processing apparatus performs relatively heavy processing such as stitching. As the image processing apparatus, an external computer such as a work station or a server and implementation by a commercially available mother board are assumed.

In order to execute the stitching in the image processing apparatus such as a work station while keeping a hardware size of the imaging apparatus small in the microscope imaging system, it is necessary to transfer tiles acquired by the imaging apparatus to the image processing apparatus without delay. When the number of pixels of the image sensor is large or when a plurality of image sensors are used, a data transmission line (a cable between the imaging apparatus and the image processing apparatus) with a low data transfer rate is a bottleneck. Therefore, it is necessary to perform compression processing on the tiles on the imaging apparatus side. Since data to be treated is extremely large in the microscope imaging system, lossy compression that can attain a compression ratio of 1/10 or less (a ratio of a data size after compression when a data size before the compression is assumed as 1) is essential.

However, when the tiles subjected to the lossy compression processing are decoded, noise (hereinafter referred to as artifact) absent in the tiles before the compression occurs. During positional deviation estimation, a degree of coincidence of a peripheral section of redundantly imaged tiles and a peripheral section of adjacent tiles is calculated. However, the artifact affects the calculation and an error is mixed in an estimated value. In a simulation performed by the inventors, positional deviation is successful if non-compressed tiles are used. However, a ratio of different positional deviation estimation results obtained when JPEG compression (a compression ratio is 4%) is performed is 10% of all trials. As an error of the positional deviation estimation results, 5% in 10% is a very small error of about one pixel. However, the remaining 5% is a relatively large positional deviation estimation error. In some case, the positional deviation estimation error is 20 pixels or more.

To solve this problem, as in a method disclosed in Japanese Patent Application Laid-open No. H11-73494 (US6259826B1), it is also conceivable to measure positional fluctuation of a stage and perform the stitching on the basis of data of the positional fluctuation. However, an expensive measuring device is necessary to measure the positional fluctuation of the stage. This leads to an increase in costs. Further, for measurement of a deformation factor such as distortion, installation itself of a measuring device is difficult.

As in a method disclosed in Japanese Patent Application Laid-open No. 2009-048487, it is also conceivable to solve the problem by sending reduced image data of tiles instead of compressed data. However, it is necessary to acquire a reduced image of the entire tiles in advance. This leads to an increase in costs because of introduction of an objective lens for reduced image acquisition. A high-frequency component included in an image before reduction is removed from the reduced image of the tiles. Therefore, a decrease in positional deviation estimation accuracy is also anticipated.

SUMMARY OF THE INVENTION

The present invention provides a technique for improving accuracy of stitching for lossily-compressed image data. The present invention also provides a technique for improving accuracy of stitching for lossily-compressed image data without causing an increase in costs and a hardware size.

A first aspect of the present invention resides in an imaging system as specified in claims 1 to 8.

A second aspect of the present invention resides in an imaging apparatus as specified in claims 9 to 12.

A third aspect of the present invention resides in an image processing apparatus as specified in claims 13 to 15.

According to the present invention, it is possible to improve accuracy of stitching for lossily-compressed image data.

Further features of the present invention will become apparent from the following description of exemplary embodiments with reference to the attached drawings.

BRIEF DESCRIPTION OF THE DRAWINGS

FIG. 1 is a configuration diagram of a microscope imaging system in a first embodiment;
FIG. 2 is a configuration diagram of an imaging processing board in the first embodiment;
FIG. 3 is an explanatory diagram of a flow of tile acquisition in the first embodiment;
FIG. 4 is a sequence chart of image acquisition processing in an imaging apparatus in the first embodiment;
FIG. 5 is a sequence chart of image correction processing in the imaging apparatus in the first embodiment;

FIG. 6 is a sequence chart of data clip/compression processing in the imaging apparatus in the first embodiment;

FIG. 7 is a diagram of an imaging state management table in the first embodiment;

FIG. 8A is an explanatory diagram of sensor correction processing in the first embodiment;

FIGS. 8B and 8C are explanatory diagrams of peripheral data clip processing in the first embodiment;

FIG. 9A is an explanatory diagram of color conversion/YC separation processing in the first embodiment;

FIG. 9B is an explanatory diagram of compression processing in the first embodiment;

FIG. 10 is a sequence chart of a data receiving process of an image processing apparatus in the first embodiment;

FIG. 11 is a sequence chart of a positional deviation/deformation estimating process in the first embodiment;

FIG. 12 is a sequence chart of an image combining process in the first embodiment;

FIGS. 13A to 13D are diagrams for explaining an image processing state management table in the first embodiment;

FIG. 14 is a diagram for explaining patches used for alignment in the first embodiment;

FIGS. 15A to 15E are diagrams for explaining stitching in the first embodiment;

FIG. 16 is a configuration diagram of a microscope imaging system in a second embodiment;

FIG. 17 is a configuration diagram of an imaging processing board in the second embodiment;

FIG. 18 is a configuration diagram of an image processing board in the second embodiment;

FIG. 19 is a sequence chart of data clip/compression processing in an imaging apparatus in the second embodiment;

FIG. 20 is a diagram for explaining lossless compression processing for peripheral data in the second embodiment;

FIG. 21 is a sequence chart of a data reception controller in the second embodiment;

FIG. 22 is a sequence chart of a positional deviation/deformation estimation controller in the second embodiment;

FIG. 23 is a sequence chart of an image combination controller in the second embodiment;

FIG. 24 is a diagram for explaining lossless decoding processing for peripheral data in the second embodiment;

FIG. 25 is a sequence chart of data clip/compression processing in a third embodiment; and

FIG. 26 is a sequence chart of a data receiving process in a fourth embodiment.

DESCRIPTION OF THE EMBODIMENTS

First Embodiment

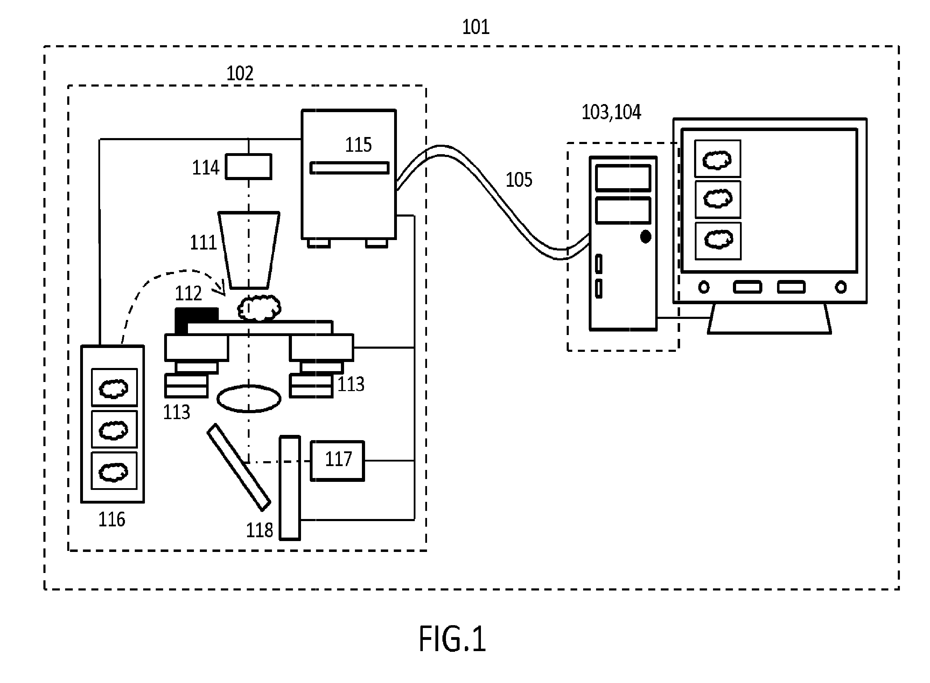

A first embodiment of the present invention is explained with reference to FIG. 1. A microscope imaging system 101 includes an imaging apparatus 102 and an image processing apparatus 103.

The imaging apparatus 102 includes an objective lens 111, a specimen retaining unit 112, a three-axis stage 113, an image sensor 114, an imaging processing board 115, a specimen selecting unit 116, a halogen lamp 117, and an electric filter wheel 118. Six kinds of color filters can be mounted on the electric filter wheel 118. In normal imaging, three kinds of color filters RGB are used.

The image processing apparatus 103 is configured by installing a necessary image processing program in a commercially available work station. The work station is also used as a control apparatus 104 for an entire system operation. The imaging apparatus 102 and the image processing apparatus 103 (the control apparatus 104) are connected by a network cable 105 and can bidirectionally transfer data. The imaging apparatus 102 and the image processing apparatus 103 may be connected by a data transmission line of another system such as a high-speed serial bus or may be connected by a wireless data transmission line rather than a wired data transmission line. In FIG. 1, the imaging apparatus 102 and the image processing apparatus 103 are shown as being arranged close to each other. However, the imaging apparatus 102 and the image processing apparatus 103 may be arranged in remote places and connected by a wide-area network such as the Internet. Conversely, the imaging apparatus 102 and the image processing apparatus 103 may be housed in one housing. The microscope imaging system 101 may assume an external appearance of one apparatus.

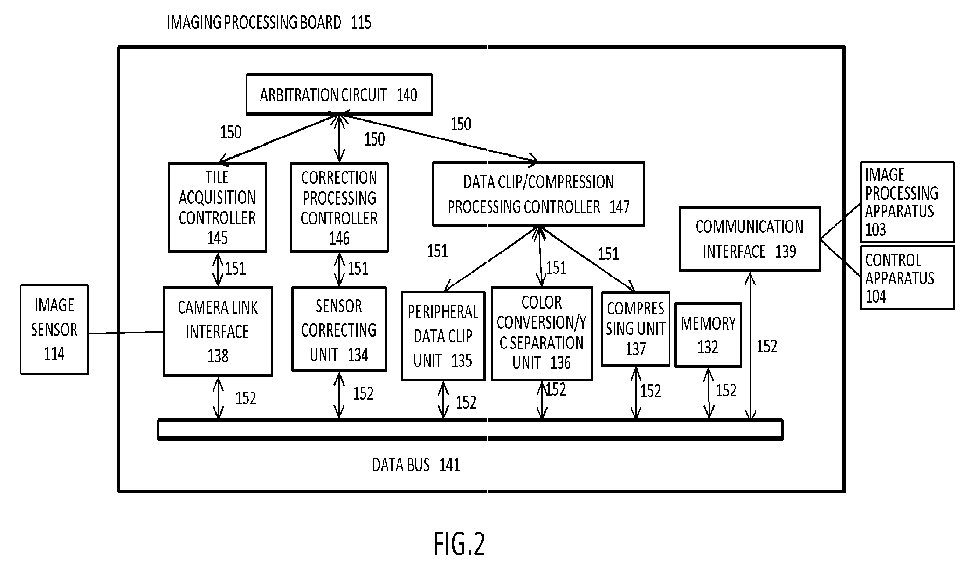

The configuration of the imaging processing board 115 of the imaging apparatus 102 is explained with reference to FIG. 2. The imaging processing board 115 includes a memory 132, a sensor correcting unit 134, a peripheral data clip unit 135, a color conversion/YC separation unit 136, a compressing unit 137, a camera link interface 138, and a communication interface 139. The imaging processing board 115 includes a tile acquisition controller 145, a correction processing controller 146, and a data clip/compression processing controller 147. Reference numeral 150 denotes a data bus control signal (an occupation permission signal, an occupation possibility inquiry, etc.). Reference numeral 151 denotes a control signal (a processing start instruction, a processing completion notice, etc.). Reference numeral 152 denotes a flow of data. After acquiring a signal representing occupation permission of a data bus (hereinafter referred to as "data bus occupation permission signal") from an arbitration circuit 140, the controllers send a processing start instruction 151 to constituent elements connected by a data bus 141 and execute image processing for each of the constituent elements.

A flow of imaging in the microscope imaging system 101 is explained. First, a user inserts a plurality of specimens, which are imaging targets, into the specimen selecting unit 116. The specimen selecting unit 116 captures thumbnail images of the specimens and sends the thumbnail images to the control apparatus 104. The user selects, from the thumbnail images displayed on a display, a specimen (an object), for which photographing of a microscopic image is performed, and an imaging range.

Acquisition of tiles

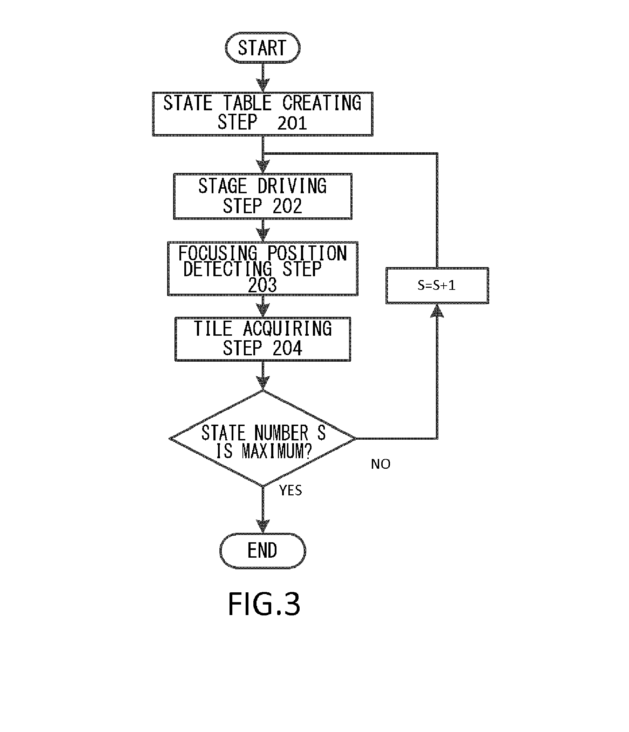

Subsequently, acquisition of tiles is performed according to a procedure described in FIG. 3. The microscope imaging system 101 divides the specimen, which is the object, into a plurality of imaging areas and performs imaging. The tiles refer to partial image data acquired from the respective imaging areas. In this embodiment, for stitching for the tiles, positions of the areas (i.e., imaging positions in imaging the areas) are controlled such that end portions of the imaging areas adjacent to each other overlap each other. Consequently, image information of the same portion of the object is included in two tiles adjacent to each other. In the following explanation, an end portion region of a tile, which is a portion overlapping an adjacent tile, is referred to as peripheral section of the tile.

In a state table creating step 201, the control apparatus 104 creates a state table on the basis of a number of a selected specimen and an imaging range. The state table is a table that records an x, y coordinate value of a three-axis stage in an initial state (hereafter, a numerical value representing a state is referred to as "state number", and the initial state is represented by a state number 0) to an end state (a state number N). That is, when an entire imaging range of a specimen is divided into (N+1) imaging areas to perform imaging, the state numbers 0 to N are also considered to represent numbers of the imaging areas. In this specification, a coordinate along two coordinate axes forming a plane perpendicular to an optical axis is represented as an x, y coordinate and a coordinate along the optical axis is represented as z coordinate.

In a stage driving step 202, the control apparatus 104 acquires an x, y coordinate values in the state number 0 from the state table, sends a driving instruction to a position of the x, y coordinate value to the three-axis stage 113, and drives the stage.

In a focusing position detecting step 203, the control apparatus 104 performs focusing position detection after the end of the stage driving. First, the control apparatus 104 sends an instruction for acquiring a plurality of tiles to the three-axis stage 113 and the image sensor 114 while driving the three-axis stage 113 in the z-coordinate axis direction and acquires a plurality of tiles having different focus positions in the z direction from the same imaging area. Each of the tiles acquired in this way is equivalent to data obtained by imaging layers at different heights (depths) in the specimen. The tile is hereinafter referred to as "layer image". In this embodiment, in center portions of a plurality of layer images, normalized variance, which is one of focus algorithms, is performed to calculate a focusing stage height (referred to as focus position along z axis).

In a tile acquiring step 204, the control apparatus 104 drives the three-axis stage 113 to the obtained height of the focus position along z axis and switches a color filter with the electric filter wheel 118 to acquire tiles corresponding to RGB colors (hereinafter referred to as "single color tiles") in order. The single color tiles are stored in the memory 132 of the imaging processing board 115.

Subsequently, the control apparatus 104 repeats the stage driving step 202, the focusing position detecting step 203, and the tile acquiring step 204 while increasing the state number S by 1 at a time and acquires single color tiles corresponding to all state numbers (imaging areas). Note that, in this embodiment, the focus position along z axis is determined for each of the state numbers (each of the imaging areas). However, when it is desired to image layers at the same height (depth) in the specimen, the same z coordinate values may be used in all the state numbers (the imaging areas). For example, the focusing position detecting step 203 may be executed only in the case of the state number 0 and may be omitted for the state number 1 and the subsequent state numbers.

Image processing performed in the imaging apparatus (data exchange performed among constituent elements)

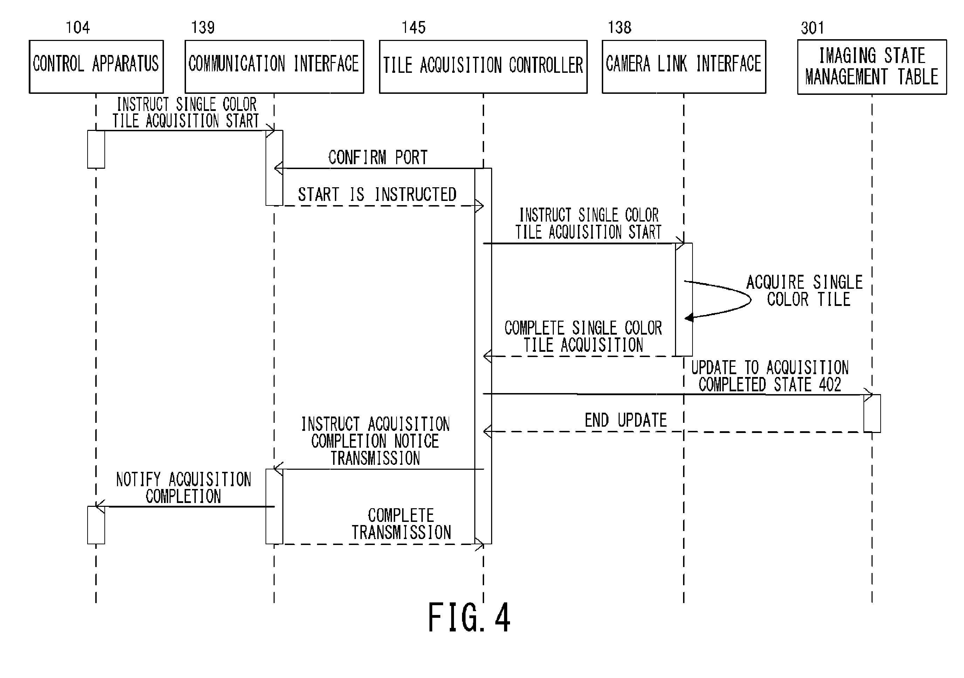

Image processing in the imaging apparatus is executed while data exchange is performed among a plurality of constituent elements. First, the data exchange performed among the constituent elements is explained with reference to FIGS. 4, 5, and 6. Thereafter, image processing executed in constituent elements that perform processing (hereinafter referred to as "individual processing") is explained.

The order of the data exchange performed among the constituent elements is managed using an imaging state management table 301. The imaging state management table 301 is an array allocated to the memory 132 of the imaging processing board. Indexes of the imaging state management table 301 corresponds to the acquisition order of the single color tiles (hereinafter referred to as "single color tile numbers"). A value of the imaging state management table 301 is a numerical value corresponding to an imaging state (hereinafter referred to as "imaging state value").

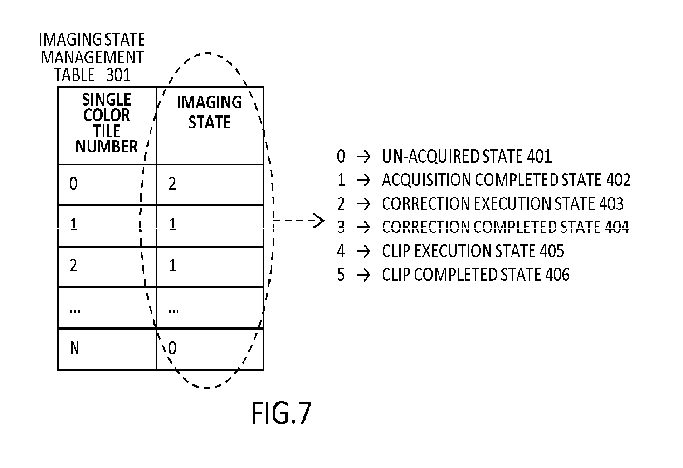

The imaging state is explained with reference to FIG. 7. The imaging state value takes values 0 to 5. The values represent states as follows: 0: an un-acquired state 401, 1: an acquisition completed state 402, 2: a correction execution state 403, 3: a correction completed state 404, 4: a clip execution state 405, and 5: a clip completed state 406. The un-acquired state 401 is a state in which the single color tiles are not acquired yet. The acquisition completed state 402 is a state in which the single color tiles are acquired but sensor correction processing 501 is not performed on the single color tiles. The correction execution state 403 is a state in which the sensor correction processing 501 is being executed on the single color tiles. The correction completed state 404 is a state in which the execution of the sensor correction processing 501 is completed. The clip execution state 405 is a state in which peripheral data clip explained below is being executed. The clip completed state 406 represents a state after completion of the peripheral data clip.

In the following explanation, setting of imaging state values corresponding to the single color tile numbers in the imaging state management table 301 is referred to as "update" of the imaging state management table. Readout of the imaging state values corresponding to the single color tile numbers is referred to as "retrieval". While the update, the retrieval, and a combined procedure of the update and the retrieval (conditional update corresponding to a retrieval result, etc.) are executed, arbitration by the arbitration circuit 140 is performed to prevent interruption by processing executed in parallel. Retrieving from the imaging state management table 301 performed at a fixed time interval until a specific value is obtained for a specific index or staying on standby until notification of the specific value is received from separate processing is referred to as "monitoring" of the imaging state management table 301.

First, as shown in FIG. 4, the control apparatus 104 sends an acquisition start instruction for a single color tile to the imaging processing board 115. After confirming that the acquisition start instruction arrives at a specific port of the communication interface 139, the tile acquisition controller 145 instructs, via the camera link interface 138, the image sensor 114 to start acquisition. After acquiring image data (a single color tile), the controller 145 stores the image data in the memory 132. After storing the image data, the controller 145 updates the value of the imaging state management table 301 to 1 (the acquisition completed state 402).

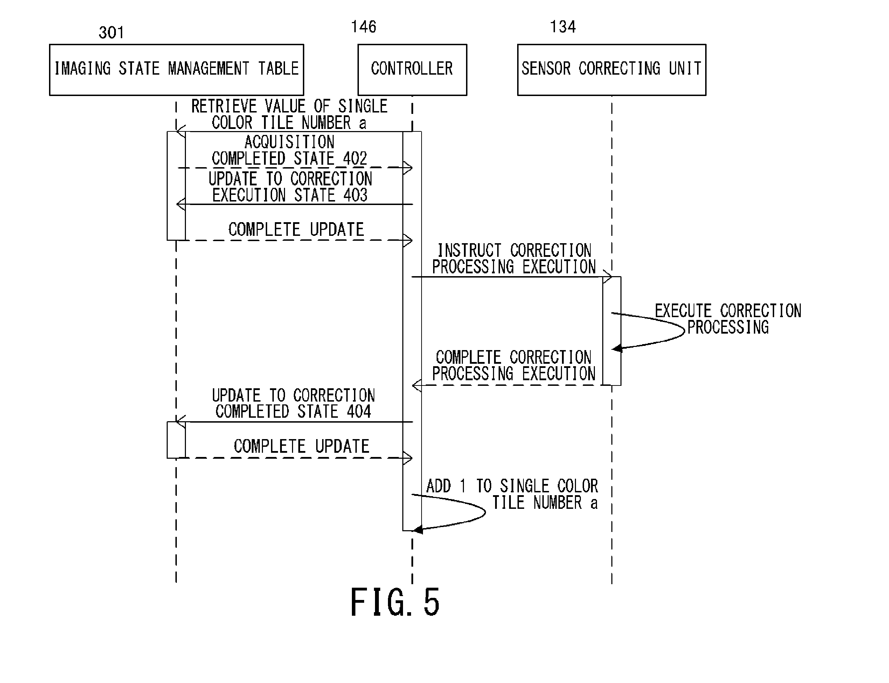

On the other hand, as shown in FIG. 5, the correction processing controller 146 starts monitoring of the imaging state management table 301 for the single color tile number 0 simultaneously with the tile acquisition start. After confirming that the value of the imaging state management table 301 is 1 (the acquisition completed state 402), the controller 146 updates the value to 2 (the correction execution state 403). Thereafter, the controller 146 sends a top address of the single color tile to the sensor correcting unit 134 and instructs execution of the sensor correction processing 501. After the sensor correction processing 501, the controller 146 updates the value of the imaging state management table 301 to 3 (the correction completed state 404), increases a single color tile number set as a monitoring target by 1, and continues the monitoring.

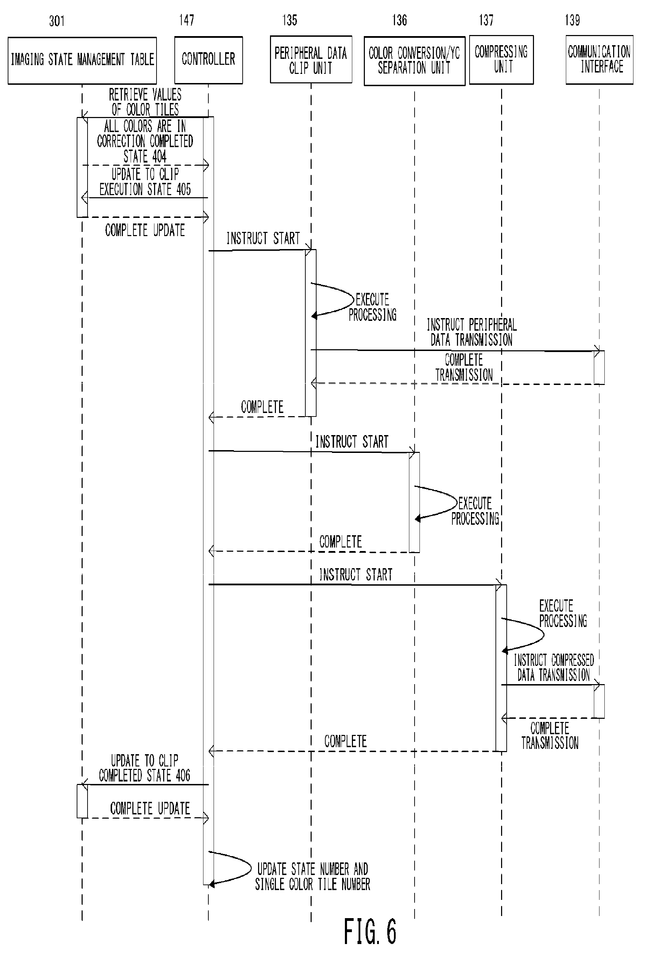

As shown in FIG. 6, the data clip/compression processing controller 147 also starts the monitoring of the imaging state management table 301 simultaneously with the tile acquisition start. The controller 147 retrieves, in order, values corresponding to a plurality of single color tile numbers belonging to the same state number (e.g., single color tile numbers of RGB colors corresponding to a state number p are 3p, 3p+1, and 3p+2). When imaging state values of all the single color tile numbers are 3 (the correction completed state 404), the controller 147 starts work after updating those values to 4 (the clip execution state 405). First, the controller 147 sends a top address of a single color tile after sensor correction having a specific color to the peripheral data clip unit 135 and instructs execution of peripheral data clip processing explained below. A color of the single color tile after sensor correction can be arbitrarily selected. A color having spectral transmittance close to a relative luminous efficiency curve of eyes (G in the case of the three primary colors RGB) only has to be selected for a specimen observed by the eyes. Peripheral data, which is a product of the peripheral data clip processing, is transferred to the image processing apparatus 103 through a network.

Note that the color of the single color tile used for the peripheral data clip processing is not limited to G. For example, the thumbnail images acquired by the specimen selecting unit 116 may be analyzed to select a color having the highest contrast. Alternatively, single color tiles of a plurality of colors may be used or data obtained by combining the single color tiles of the plurality of colors may be used.

Subsequently, the controller 147 sends a top address of the single color tile after sensor correction belonging to the same state number to the color conversion/YC separation unit 136 and executes color conversion processing. Output data of the color conversion/YC separation unit 136 (hereinafter referred to as "tile after YC separation") is sent to the compressing unit 137 and compression processing is executed. Output data of the compressing unit 137 (hereinafter referred to as "compressed tile") is transferred to the image processing apparatus 103 through the communication interface 139. After the transfer of the compressed tile, the controller 147 updates the value of the imaging state management table 301 to 5 (the clip completed state 406) with respect to single color tile numbers belonging to the same state number, increases the single color tile number set as the monitoring target by 3, and continues the monitoring.

After the image processing for a single color tile of the state number N ends, the controller 147 resets the value of the imaging state management table 301 to 0 (the un-acquired state 401). The image processing in the imaging apparatus ends.

Image processing (individual processing) performed in the imaging apparatus

The individual processing is explained.

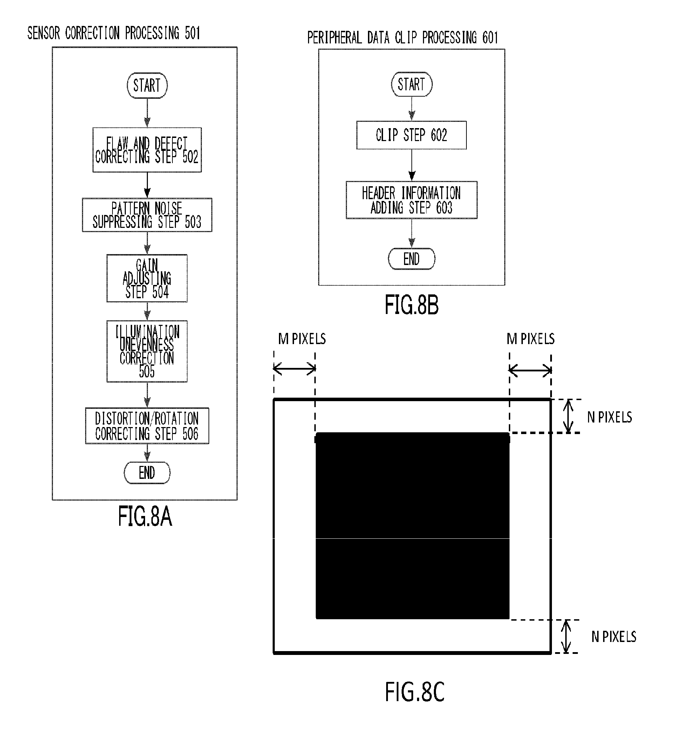

The sensor correction processing 501 is explained with reference to a flowchart of in FIG. 8A. A flaw and defect correcting step 502, a pattern noise suppressing step 503, a gain adjusting step 504, an illumination unevenness correcting step 505, and a distortion/rotation correcting step 506 are carried out in this order on single color tile data read out from the memory 132. Output values are recorded on the memory 132. The flaw and defect correcting step 502 is processing for removing noise due to a flaw and a pixel defect of the image sensor. The pattern noise suppressing step 503 is processing for removing pattern noise caused by hardware of the image sensor. The gain adjusting step 504 is processing for increasing a brightness level of an entire image by multiplying a pixel value with a gain (a constant), for example, when an exposure time is insufficient. The illumination unevenness correcting step 505 is processing for correcting brightness unevenness due to illumination unevenness between the center and the periphery of a visual field. The distortion/rotation correcting step 506 is processing for correcting aberration of the objective lens, relative rotation shift of the stage and the image sensor, and the like. The steps are performed in general image processing and well known. Therefore, explanation of the steps is omitted.

Peripheral data clip processing 601 is explained with reference to a flowchart of in FIG. 8B. In a clip step 602, raster scan of pixel values is performed from the top address of the single color tile after the sensor correction to copy data to another memory region. In that case, as shown in FIG. 8C, data in the center section (a black region) corresponding to neither left and right peripheral section M pixels nor upper and lower peripheral section N pixels is not copied. The copied data of only the peripheral sections is hereinafter referred to as peripheral data. In a header information adding step 603, header information (a state number, widths M and N of clipped regions, and the number of x, y direction pixels of the single color tile) is added to the peripheral data.

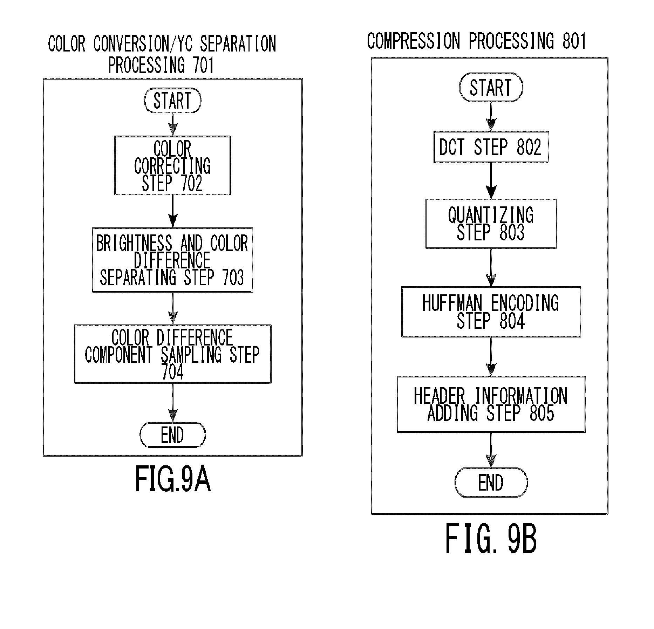

Color conversion/YC separation processing 701 is explained with reference to a flowchart of in FIG. 9A. In a color correcting step 702, pixel values equivalent to the three primary colors RGB (hereinafter referred to as RGB values) are calculated by performing linear arithmetic operation given by Expression 1 on pixel values of single color tiles after sensor correction of respective colors.

[Math. 1]

$$\begin{pmatrix} R \\ G \\ B \end{pmatrix} = \begin{bmatrix} a_{11} & a_{12} & a_{13} \\ a_{21} & a_{22} & a_{23} \\ a_{31} & a_{32} & a_{33} \end{bmatrix} \cdot \begin{pmatrix} P_1 \\ P_2 \\ P_3 \end{pmatrix} \quad \ldots \text{Expression 1}$$

In Expression 1, $P_1$ to $P_3$ are pixel values obtained in the same position and $a_{11}$ to $a_{33}$ are coefficients of a color correction matrix in three single color tiles after sensor correction belonging to the same state number. The coefficients of the color correction matrix are given beforehand according to a color balance and spectral transmittance of a color filter.

In a brightness and color difference separating step 703, a brightness component Y and two color difference components Cb and Cr are calculated from the RGB values according to Expression 2.

[Math. 2]

$$\begin{pmatrix} Y \\ C_b \\ C_r \end{pmatrix} = \begin{bmatrix} 0.299 & 0.587 & 0.114 \\ -0.16874 & -0.33126 & 0.5 \\ 0.5 & -0.41869 & -0.08131 \end{bmatrix} \cdot \begin{pmatrix} R \\ G \\ B \end{pmatrix} + \begin{pmatrix} 0 \\ 128 \\ 128 \end{pmatrix} \quad \ldots \text{Expression 2}$$

In a color difference component sampling step 704, subsampling for the color difference components Cb and Cr of YCC values is performed to reduce data. Usually, the color difference components Cb and Cr are subsampled at a one-pixel interval. However, when it is desired to keep image quality, this step is not carried out.

Image data of each of the Y component and the color difference components Cb and Cr subjected to the subsampling obtained by executing the above steps are obtained. United data of the image data is set as an output (a tile after YC separation).

Compression processing 801 is explained with reference to a flowchart of in FIG. 9B. The compression processing 801 used in this embodiment is JPEG compression processing of a DCT system. Since the JPEG compression processing of the DCT system is generally well known, details of steps are omitted and only an overview is explained. In a DCT step 802, the tile after YC separation is divided into blocks of 8x8 pixels. DCT is executed on the blocks. In a quantizing step 803, quantization of a DCT coefficient of the blocks is performed. In a Huffman encoding step 804, the quantized DCT coefficient is compressed by Huffman encoding. In a header information adding step 805, header information (a state number, the number of x, y direction pixels of a single color tile, a subsampling interval of the color difference components Cr and Cb, a quantization table used in the quantizing step, and the like) is added to the data after the processing to set the data as output data (a compressed tile).

Image processing performed in the image processing apparatus (data exchange performed among constituent elements)

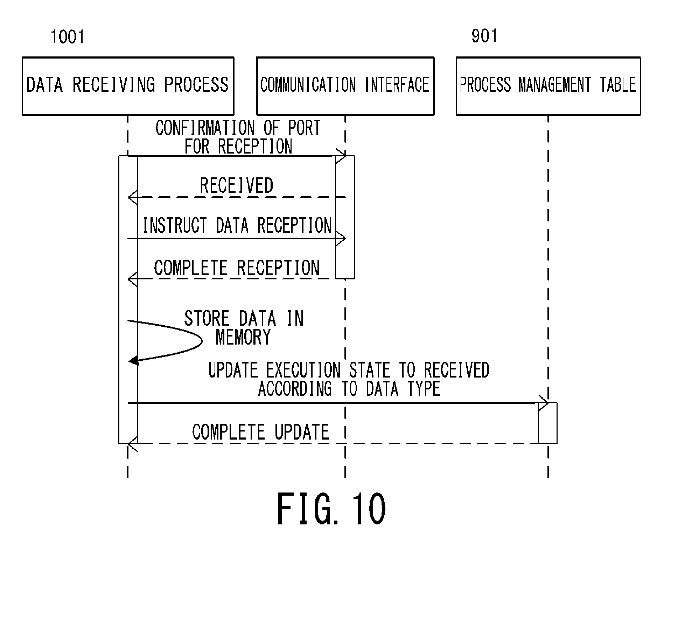

Image processing performed in the image processing apparatus is also executed while data exchange is performed among a plurality of constituent elements (a plurality of processes executed by a program and tables for state management allocated to a shared memory). As in the explanation of the image processing in the imaging apparatus, the data exchange is explained with reference to FIGS. 10, 11, and 12. Then, individual processing executed in the constituent elements is explained.

A shared memory region accessible by different processes is secured in a main memory of the image processing apparatus 103. Four arrays and one variable are allocated to the shared memory region.

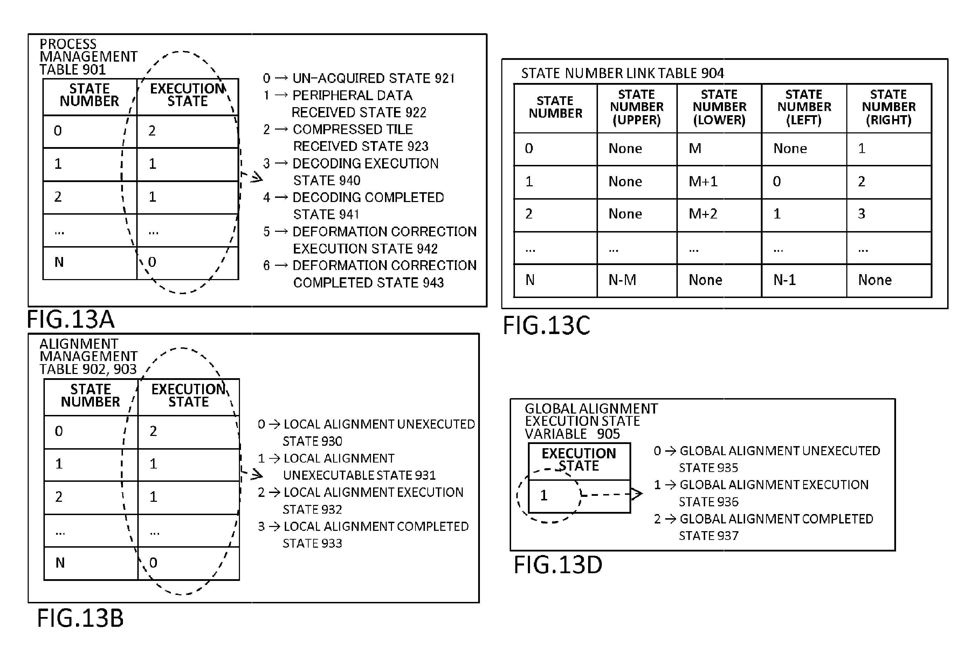

The arrays and the variable and execution states of image processing represented by the arrays and the variable are explained with reference to FIGS. 13A to 13D. A first array is an array for managing a plurality of processes and is hereinafter referred to as process management table 901. Second and third arrays are arrays for managing execution of local alignment processing and are hereinafter referred to as alignment management tables 902 and 903. The local alignment processing is processing for calculating, when one tile is set as a reference in adjacent two tiles, positional deviation/deformation of the other tile using respective peripheral data. Details of the local alignment processing are explained below. A fourth array is an array used for state number retrieval of adjacent tiles and is hereinafter referred to as state number link table 904. The variable is a variable indicating an execution state of the global alignment and is hereinafter referred to as global alignment execution state variable 905. The global alignment processing is processing for calculating positional deviation/deformation given to tiles on the basis of relative positional deviation/deformation between the two tiles obtained by the local alignment processing. Details of the global alignment processing are explained below.

Indexes of the process management table 901 and the alignment management tables 902 and 903 are state numbers. Values of the tables are numerical values corresponding to states representing the progress of image processing executed in a process (hereinafter referred to as image processing execution states).

The image processing execution state of the process management table 901 takes values 0 to 6. The values represent states as follows: 0: an un-acquired state 921, 1: a peripheral data received state 922, 2: a compressed tile received state 923, 3: a decoding execution state 940, 4: a decoding completed state 941, 5: a deformation correction execution state 942, and 6: a deformation correction completed state 943. The un-acquired state 921 is a state in which data is not transmitted from the imaging apparatus. The peripheral data received state 922 is a state in which peripheral data is received from the imaging apparatus. The compressed tile received state 923 is a state in which both of peripheral data and a compressed tile are received. The decoding execution state 940 is a state in which decoding processing explained blow is being executed. The decoding completed state 941 is a state in which the execution of the decoding is completed. The deformation correction execution state 942 is a state in which deformation correction processing explained below is being executed. The deformation correction completed state 943 is a state in which the execution of the deformation correction is completed.

Image processing execution states of the alignment management tables 902 and 903 take vales 0 to 3. The values represent states as follows: 0: a local alignment unexecuted state 930, 1: a local alignment unexecutable state 931, 2: a local alignment execution state 932, and 3: a local alignment completed state 933. The local alignment unexecuted state 930 is a state in which the local alignment processing is not executed. The local alignment unexecutable state 931 is a state in which the local alignment processing cannot be executed because, for example, adjacent tiles are absent. The local alignment execution state 932 is a state in which the local alignment processing is being executed. The local alignment completed state 933 is a state in which the execution of the local alignment processing is completed.

An image processing execution state of the global alignment execution state variable 905 takes values 0 to 2. The values represent states as follows: 0: a global alignment unexecuted state 935, 1: a global alignment execution state 936, and 2: a global alignment completed state 937. The global alignment unexecuted state 935 is a state in which the global alignment processing is not executed. The global alignment execution state 936 is a state in which the global alignment processing is being executed. The global alignment completed state 937 is a state in which the execution of the global alignment processing is completed.

A value of the process management table 901 represents a state of a tile with respect to an index (a state number). An initial value is 0 (the un-acquired state 921). A value of the alignment management table 902 represents an execution state of local alignment performed between an adjacent tile present above a tile corresponding to the index and the tile corresponding to the state number. A value of the alignment management table 903 represents an execution state of local alignment performed between an adjacent tile present on the left of the tile corresponding to the index and the tile corresponding to the state number. Initial values of the alignment management tables 902 and 903 are 0 (the local alignment unexecuted state 930) or 1 (the local alignment unexecutable state 931). The image processing execution state is set to the local alignment unexecutable state 931 when adjacent tiles are absent or acquisition of adjacent tiles is omitted to reduce the number of times of imaging.

Operation same as the operation for the imaging state management table 301 (the update, the retrieval, and the combined procedure of the update and the retrieval) can be executed on the process management table 901. Two kinds of operation related to the execution of the local alignment processing (hereinafter referred to as alignment state monitoring and alignment state update) can be executed on the process management table 901 and the alignment management tables 902 and 903. During the execution of the operation, arbitration by lock acquisition is performed to prevent other processes from accessing the tables.

An index of the state number link table 904 is a state number. A value of the state number link table 904 is a vector having, as four elements, state numbers of tiles located above and below and on the left and right of a tile equivalent to the index.

The global alignment execution state variable 905 is a variable that retains an execution state of global alignment. An initial value is 0 (the global alignment unexecuted state 935).

The plurality of processes can be classified into three kinds according to processing executed on the inside. The processes are hereinafter respectively referred to as a data receiving process, a positional deviation/deformation estimating process, and an image combining process. Depending on hardware resources of the image processing apparatus, it is also possible to increase the number of respective kinds of processes and increase the speed of the processing. In this embodiment, a system in which the processes independently perform retrieval from and monitoring of the process management table 901 is adopted. However, processing efficiency is sometimes deteriorated because an access to the process management table 901 is a bottleneck. In such a case, a configuration for performing retrieval from the process management table 901, providing a dedicated process for issuing a processing command to a slave process on the basis of a retrieval result, and causing the slave process to execute the three kinds of processing may be used. This configuration is generally known as a producer consumer design pattern.

Data exchange performed between a data receiving process 1001 and the constituent elements is explained with reference to FIG. 10. The data receiving process 1001 monitors a specific port of a network, receives data (peripheral data or a compressed tile) transmitted by the imaging apparatus 102, and stores the data in the main memory. When the data is the peripheral data, the data receiving process 1001 updates the value of the process management table 901 to 1 (the peripheral data received state 922). When the data is the compressed tile, the data receiving process 1001 updates the value of the process management table 901 to 2 (the compressed tile received state 923). After the end of the data exchange, the data receiving process 1001 returns to the port monitoring state.

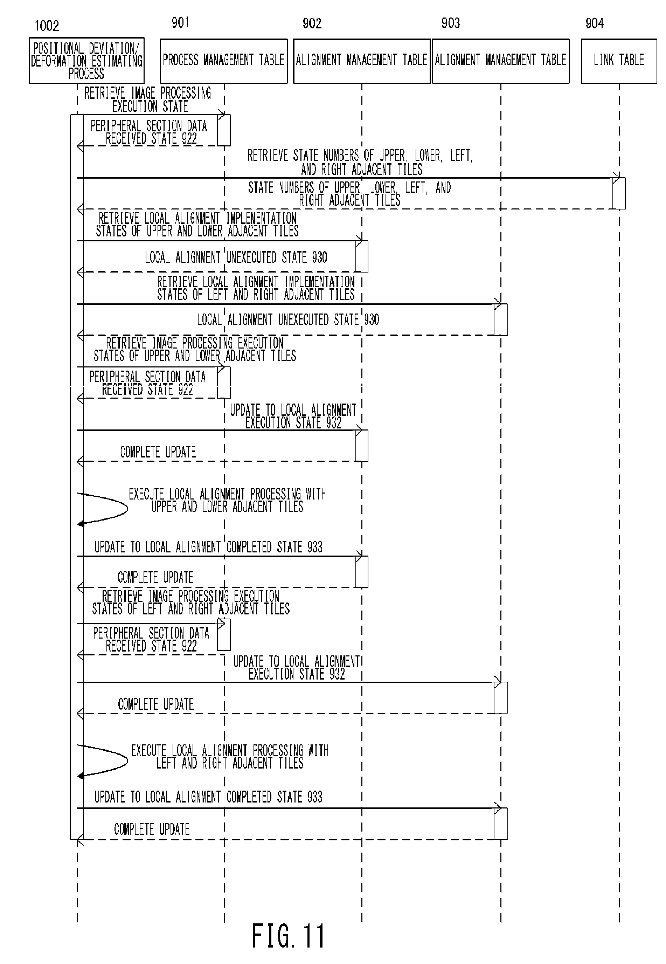

Data exchange performed between the positional deviation/deformation estimating process 1002 and the constituent elements is explained with reference to FIG. 11. When the execution of the positional deviation/deformation estimating process 1002 is started, the positional deviation/deformation estimating process 1002 initializes a state number set as a processing target (hereinafter referred to as "target state number") to 1 or a predetermined value. Subsequently, the positional deviation/deformation estimating process 1002 executes alignment state monitoring operation on the process management table 901 and the alignment management tables 902 and 903.

The alignment state monitoring operation is explained below. First, the positional deviation/deformation estimating process 1002 confirms that a state of image processing execution on a tile corresponding to the target state number is not 0 (the un-acquired state 921) (equal to or larger than 1). Subsequently, the positional deviation/deformation estimating process 1002 retrieves, using the alignment management tables 902 and 903, implementation states of the local alignment processing between the tile corresponding to the target state number and four tiles adjacent to the tile above and below and on the left and right of the tile. The local alignment implementation states of the adjacent tiles above and on the left are directly obtained from the alignment management tables 902 and 903. On the other hand, the local alignment implementation states of the tiles located blow and on the right of the tile are obtained using the alignment management tables 902 and 903 after state numbers of the tiles located below and on the right are obtained using the state number link table 904.

When the local alignment implementation state of an adjacent tile is 0 (the local alignment unexecuted state 930), the positional deviation/deformation estimating process 1002 acquires an image processing execution state of the adjacent tile using the process management table 901. When the image processing execution state is not 0 (the un-acquired state 921), the positional deviation/deformation estimating process 1002 updates the values of the alignment management tables 902 and 903 to 2 (the local alignment execution state 932).

After the end of the alignment state monitoring operation, the positional deviation/deformation estimating process 1002 executes the local alignment processing on the adjacent tile, the image processing execution state of which is updated to 2 (the local alignment execution state 932), and the tile corresponding to the target state number.

After the execution of the local alignment processing, the positional deviation/deformation estimating process 1002 executes alignment state update operation. The alignment state update operation is operation for updating the values of the alignment management tables 902 and 903. The positional deviation/deformation estimating process 1002 updates a value corresponding to the adjacent tile, for which the local alignment is carried out, to 3 (the local alignment completed state 933).

When the target state number is N (a final state), after the execution of the local alignment processing, the positional deviation/deformation estimating process 1002 executes the global alignment processing. Output data of the global alignment processing is a parameter for geometric correction for tiles and is hereinafter referred to as "positional deviation/deformation estimation amount". When starting the execution, after updating the value of the global alignment execution state variable 905 to 1 (the global alignment execution state 936), the positional deviation/deformation estimating process 1002 executes the global alignment processing. After the execution, the positional deviation/deformation estimating process 1002 updates the value of the global alignment execution state variable 905 to 2 (the global alignment completed state 937).

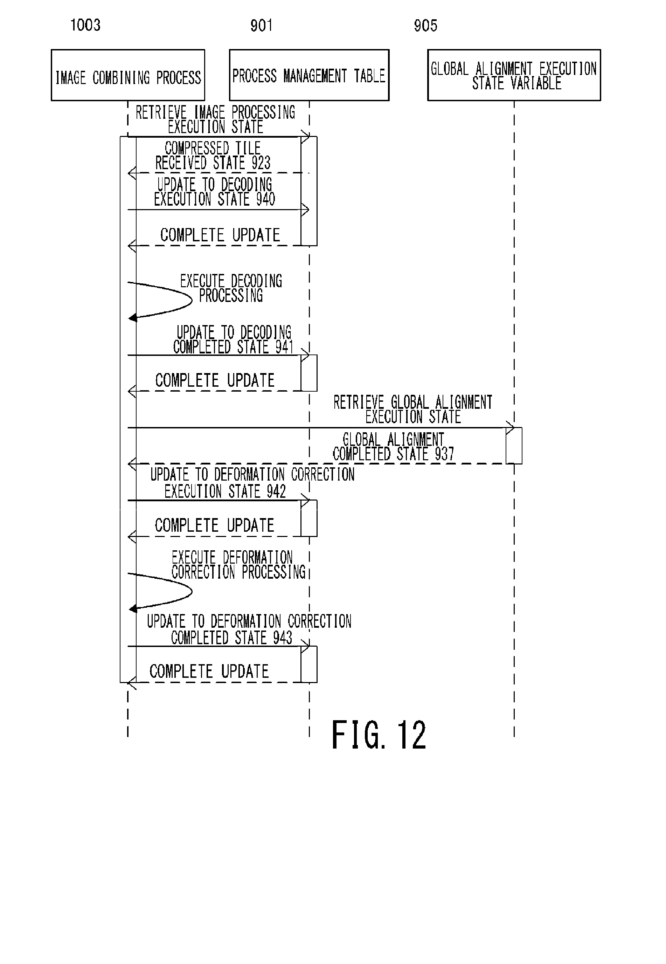

Data exchange performed between the image combining process 1003 and the constituent elements is explained with reference to FIG. 12. Like the positional deviation/deformation estimating process 1002, when the process is started, the image combining process 1003 initializes the target state number to 1 or a predetermined value. After the initialization, the image combining process 1003 monitors the process management table 901 until a value corresponding to the target state number changes to 2 (the compressed tile received state 923). After confirming the change of the state, the image combining process 1003 updates the value of the process management table 901 to 3 (the decoding execution state 940) and executes decoding processing explained below on compressed data corresponding to the target state number. Output image data of the decoding processing is hereinafter referred to as decoded tile. After executing the decoding processing, the image combining process 1003 updates the value of the process management table 901 to 4 (the decoding completed state 941).

Subsequently, the image combining process 1003 performs monitoring of the global alignment execution state variable 905. After confirming that the numerical value of the global alignment execution state variable 905 changes to 2 (the global alignment completed state 937), the image combining process 1003 updates the value of the process management table 901 to 5 (the deformation correction execution state 942) and performs deformation correction processing on the decoded tile corresponding to the target state number. An output of the deformation correction processing is a tile after positional deviation/deformation correction corresponding to the target state number and reduced image data of the tile after positional deviation/deformation correction. The tile after positional deviation/deformation correction and the reduced image data are stored in the main memory of the image processing apparatus 103. After the end of the deformation correction processing, the image combining process 1003 updates the value of the process management table 901 to 6 (the deformation correction completed state 943). When the target state number is not N, the image combining process 1003 updates the target state number and returns to the monitoring state of the process management table 901. A numerical value to be updated is the same as the numerical value in the positional deviation/deformation estimating process.

On the other hand, when the target state number is N, after confirming that the values of the process management table 901 corresponding to all the state numbers change to 6 (the deformation correction completed state 943), the image combining process 1003 executes image combination processing explained below. As a result of the image combination processing, image data after combination explained below is obtained and stored in the hard disk.

After the image data after combination is stored in the hard disk, all the tables and the variable allocated to the shared memory and the state numbers retained by all the processes are initialized, whereby the image processing performed in the image processing apparatus ends.

Image processing (individual processing) executed in the image processing apparatus

Details of the respective kinds of image processing performed in the image processing apparatus are explained.

The local alignment processing is processing for calculating, when one tile is set as a reference in adjacent two tiles, positional deviation/deformation of the other tile using respective peripheral data. In the following explanation, the tile set as the reference is referred to as "reference tile" and the tile not set as the reference is referred to as "comparative tile". When adjacent tiles are arranged on the left and right, the tile on the left side is set as the reference tile. Then the adjacent tiles are arranged on upper and lower sides, the tile on the upper side is set as the reference tile. It is assumed that the positional deviation/deformation can be represented by affine transformation given by Expression 3.
[Math. 3]

$$ \mathbf{x'} = \mathbf{M} \cdot \mathbf{x} + \mathbf{s} + \mathbf{t} = \begin{bmatrix} m_{11} & m_{12} \\ m_{21} & m_{22} \end{bmatrix} \cdot \begin{pmatrix} x \\ y \end{pmatrix} + \begin{pmatrix} s_1 \\ s_2 \end{pmatrix} + \begin{pmatrix} t_1 \\ t_2 \end{pmatrix} \quad \text{...Expression 3} $$

In Expression 3, x, y is a coordinate value representing a pixel position in the reference tile, x', y' is a coordinate value representing a pixel position in the comparative tile, $m_{11}$ to $m_{22}$ are matrix component concerning deformation, $s_1$, $s_2$ is a matrix component concerning positional deviation, and $t_1$, $t_2$ is a center coordinate of the comparative tile at the time when the center of the reference tile is set as the origin.

The local alignment processing is based on a Feature-based registration method. In the Feature-based registration, first, positions having features like corners and straight lines are extracted from peripheral data redundantly imaged in adjacent two tiles. Subsequently, a parameter of positional deviation/deformation for minimizing a difference between positions having the same feature belonging to the respective tiles is calculated by a method of least squares.

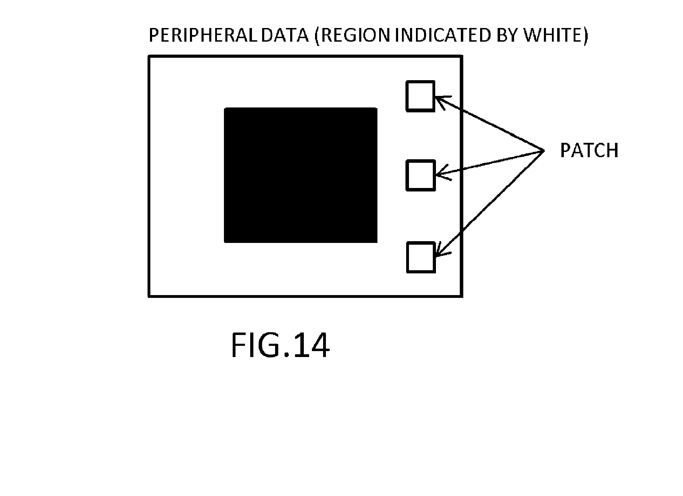

However, in a pathological specimen image, which is an imaging target of this embodiment, features suitable for position detection like corners and straight lines are hardly present. In such a case, as shown in FIG. 14, in general, rectangular very small sections (hereinafter referred to as patches) are provided in the peripheral data and patterns in the patches are used as features. In this embodiment, the Feature-based registration in which the patches are used as features is adopted.

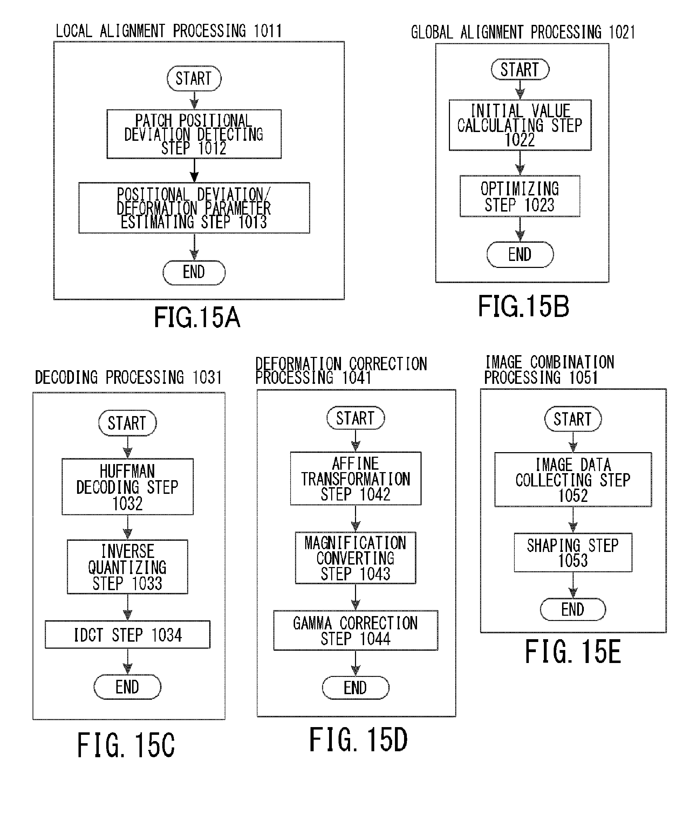

A flow of local alignment processing 1011 is explained with reference to a flowchart of FIG. 15A. In a patch positional deviation detecting step 1012, first, a patch is acquired from the peripheral data of the reference tile. The position of the patch may be arbitrarily selected or may be given beforehand. However, the patch needs to include a finer pattern (a texture). Subsequently, the position of the patch is estimated in the peripheral data of the comparative tile. The estimated position is obtained by a normalization correlation function given by Expression 4.

[Math. 4]

$$E(\mathbf{u}) = \frac{\sum_i \left(I_0(\mathbf{x}_i) - \overline{I_0}\right)\left(I_1(\mathbf{x}_i + \mathbf{u}) - \overline{I_1}\right)}{\sqrt{\sum_i \left(I_0(\mathbf{x}_i) - \overline{I_0}\right)^2 \left(I_1(\mathbf{x}_i + \mathbf{u}) - \overline{I_1}\right)^2}}$$

$$\overline{I_0} = \frac{1}{N}\sum_i I_0(\mathbf{x}_i), \qquad \overline{I_1} = \frac{1}{N}\sum_i I_1(\mathbf{x}_i + \mathbf{u}) \qquad \text{...Expression 4}$$

In Expression 4, $I_0(x)$ is a pixel value of a pixel present in a position x of the patch of the reference tile, $I_1(x)$ is a pixel value of a pixel present in the position x in the patch of the comparative tile, i is a number of the pixel in the patch, N is the number of pixels in the patch, and u is a vector representing positional deviation between both the patches. When the normalization correlation function indicates a maximum value, u is used as inter-patch positional deviation.

In a positional deviation/deformation parameter estimating step 1013, a coefficient of a positional deviation/deformation function given by Expression 3 is estimated according to Expression 5.

[Math. 5]

$$\begin{pmatrix} m_{11} \\ m_{12} \\ s_1 \\ m_{21} \\ m_{22} \\ s_2 \end{pmatrix} = G\left(\begin{bmatrix} x_1 & y_1 & 1 & 0 & 0 & 0 \\ 0 & 0 & 0 & x_1 & y_1 & 1 \\ x_2 & y_2 & 1 & 0 & 0 & 0 \\ 0 & 0 & 0 & x_2 & y_2 & 1 \\ & & & \vdots & & \\ x_P & y_P & 1 & 0 & 0 & 0 \\ 0 & 0 & 0 & x_P & y_P & 1 \end{bmatrix}\right) \cdot \begin{pmatrix} x_1' - t_1 - x_1 \\ y_1' - t_2 - y_1 \\ x_2' - t_1 - x_2 \\ y_2' - t_2 - y_2 \\ \vdots \\ x_P' - t_1 - x_P \\ y_P' - t_2 - y_P \end{pmatrix} + \begin{pmatrix} 1 \\ 0 \\ 0 \\ 0 \\ 1 \\ 0 \end{pmatrix} \cdot \quad \text{...Expression 5}$$

In Expression 5, G(M) is a function that returns a general inverse matrix of a matrix M. The general inverse matrix is a pseudo inverse matrix that functions with respect to a non-square matrix. There are various kinds of general inverse matrixes. In this embodiment, the general inverse matrix is $G(M) = [M^T M]^{-1} M^T$ used in general when a least square solution is calculated. In Expression 5, $x_i$, $y_i$ (i=1, 2, ..., and P) represents center coordinates of P patches present in the reference tile and $x'_i$, $y'_i$ (i=1, 2, ..., and P) represents center coordinate estimated values of the patches of the reference tile estimated from the comparative tile. In Expression 5, $m_{11}$, $m_{12}$, $m_{21}$, $m_{22}$, $s_1$, $s_2$, $t_1$, and $t_2$ are coefficients of Expression 3. Elements of the positional deviation u obtained by Expression 4 are ($x'_i$-xi, $y'_i$-yi) (i=1, 2, ..., and P) and $t_1$, $t_2$ is known. Therefore, the coefficients $m_{11}$, $m_{12}$, $m_{21}$, $m_{22}$, $s_1$, and $s_2$ of the positional deviation/deformation function can be calculated. The obtained coefficients of the positional deviation/deformation function are stored in the main memory.

The global alignment processing is processing for calculating positional deviation/deformation given to the tiles on the basis of the relative positional deviation/deformation between the two tiles obtained by the local alignment processing. As simplest processing, it is conceivable to adopt processing for determining, in order, positional deviation/deformation of tiles present in the periphery without giving deformation to a tile present at the upper left. However, when the upper left tile minutely rotates with respect to an absolute coordinate, the position of a tile at the lower right is likely to greatly deviate. When accuracy of a halfway relative positional deviation/deformation estimated value is low, a gap is likely to occur between the lower right tile and a tile adjacent to the lower right tile. The global alignment processing adopted in this embodiment is a method that suppresses the occurrence of these problems.

Global alignment processing 1021 is explained with reference to a flowchart of FIG. 15B. In an initial value calculating step 1022, a positional deviation/deformation amount with respect to one tile is calculated on the basis of relative deviation and deformation between two tiles. For example, when a leftmost tile is set as a reference in a situation in which four tiles are laterally arranged, a positional deviation/deformation amount of a rightmost tile is given by Expression 6 on the basis of the relative positional deviation between the two tiles.

[Math. 6]

$$\mathbf{x}' = A_{1,4}(\mathbf{x}) = A_{3,4}\left(A_{2,3}\left(A_{1,2}(\mathbf{x})\right)\right) = \mathbf{M}_{1,4} \cdot \mathbf{x} + \mathbf{s}_{1,4} + \mathbf{t}_{1,4}, \quad \mathbf{t}_{1,4} = \mathbf{t}_{1,2} + \mathbf{t}_{2,3} + \mathbf{t}_{3,4}.$$

$$...\text{Expression 6}$$

In Expression 6, $A_{i,k}(\mathbf{x})$ is the affine transformation (Expression 3) representing positional deviation/deformation of a k-th tile when an i-th tile is set as a reference. $M_{i,k}$, $s_{i,k}$, and $t_{i,k}$ are respectively a matrix representing deformation, a vector representing positional deviation, and a vector representing a center position of the k-th tile when the i-th tile is set as a reference. A composite function of the affine transformation is affine transformation. Further, since a vector $t_{1,4}$ representing the center position is given beforehand, unknown numbers $M_{1,4}$ and $s_{1,4}$ can be determined.

When the tiles are stitched on the basis of the positional deviation/deformation amount obtained by the initial value calculating step 1022, the plurality of tiles used in the calculation of Expression 6 are satisfactorily stitched. However, stitches easily appear between the tiles and tiles not used for the calculation. In an optimizing step 1023, adjustment of the positional deviation/deformation amount of the tiles obtained by the initial value calculating step 1022 is performed to suppress stitches. Specifically, in a tile apart from the reference tile, the calculation of Expression 6 is performed in a plurality of different routes. An average of obtained values is adopted as a positional deviation/deformation amount. As a result, it is possible to determine the positional deviation/deformation amount of the tiles without causing a gap between the adjacent tiles.

Decoding processing 1031 is explained with reference to a flowchart of FIG. 15C. The decoding processing 1031 is JPEG decoding processing of the DCT system. Since the JPEG decoding processing of the DCT system is generally well known, details of steps are omitted and only an overview is explained. In a Huffman decoding step 1032, Huffman decoding processing is performed on compressed data to calculate a post-quantization DCT coefficient. In an inverse quantizing step 1033, a continuous DCT coefficient is calculated from the post-quantization DCT coefficient. In an IDCT step 1034, a tile after YC separation is restored from the DCT coefficient.

Deformation correction processing 1041 is explained with reference to a flowchart of FIG. 15D. In an affine transformation step 1042, first, a coordinate value in a correction target tile corresponding to a pixel of a tile after the affine transformation processing (hereinafter referred to as "pixel of attention") is calculated on the basis of Expression 7.

[Math. 7]

$$\mathbf{x}' = \mathbf{M}' \cdot \mathbf{x} + \mathbf{s}' + \mathbf{t}' = \begin{bmatrix} m'_{11} & m'_{12} \\ m'_{21} & m'_{22} \end{bmatrix} \cdot \begin{pmatrix} x \\ y \end{pmatrix} + \begin{pmatrix} s'_1 \\ s'_2 \end{pmatrix} + \begin{pmatrix} t'_1 \\ t'_2 \end{pmatrix}. \qquad ...\text{Expression 7}$$

In Expression 7, x, y is a coordinate value of the pixel of attention and x', y' is a coordinate value of the pixel of attention in the correction target tile (the origin is a center point of the reference tile). In Expression 7, $t'_1$, $t'_2$ is a coordinate value of a center point of a tile used for correction (the origin is the center of the reference tile). In Expression 7, $m'_{11}$ to $m'_{22}$ and $s'_1$, and $s'_2$ are positional deviation/deformation amounts of tiles obtained by the global alignment processing 1021.

A value of the pixel of attention in the correction target tile is calculated by neighboring pixel interpolation. In the tile after the affine transformation processing, the pixel of attention is raster-scanned to obtain all pixel values in the tile after the affine transformation processing.

In a magnification converting step 1043, image data obtained by multiplying the tile after the affine transformation processing with a predetermined magnification is generated. This is for the purpose of simplifying magnification conversion processing during display by creating image data given with different magnifications in advance. In a gamma correction step 1044, gamma correction is performed on the tile after the affine transformation processing and the tile after the magnification transformation processing. The magnification converting step 1043 and the gamma correction step 1044 may be omitted when unnecessary.

Image combination processing 1051 is explained with reference to the flowchart of FIG. 15E. In an image data collecting step 1052, tiles generated in the image combining process having target state number equal to or smaller than N are collected for each of same magnifications. In a shaping step 1053, after an overlapping region of adjacent tiles is appropriately processed, the tiles are shaped into one image data. An image format is determined depending on a display program. For example, when a display program is adapted to switching display at a magnification different from a magnification of display of JPEG compressed data, a format in which JPEG compressed data different for each of magnifications are collected in one ZIP compressed folder is adopted.

As explained above, it is possible to generate image data after combination, which is an output of the microscope imaging system.

In this way, the first embodiment of the present invention is the microscope imaging system that transfers the peripheral data of the tiles to the image processing apparatus in an non-compressed state or a state in which image data is lossily compressed and generates compressed data on the basis of a positional deviation/deformation amount estimated using the peripheral data. With this configuration, it is possible to perform accurate stitching and high-speed processing while keeping the hardware size of the imaging apparatus small.

In this embodiment, transfer of the peripheral data from the imaging apparatus to the image processing apparatus and transfer of the compressed tile are asynchronously performed. Specifically, the peripheral data is transferred to the image processing apparatus first. The image processing apparatus executes the calculation of the positional deviation/deformation estimated amount by making use of time in which the imaging apparatus is performing the generation, lossy compression, and the transfer of the tile data. In other words, the image processing apparatus acquires the peripheral data first and performs determination processing for a parameter used for stitching of the tiles by making use of a time lag before the tile data can be acquired. Therefore, the image processing apparatus can start image combination processing immediately after receiving the compressed tile from the imaging apparatus. Consequently, efficient (i.e., high-speed) stitching is realized. In particular, in this embodiment, processing such as color conversion and YC separation is not performed on the peripheral data (RAW data is used as it is). Therefore, it is possible to minimize a load on the imaging apparatus for creation of the peripheral data and transfer the peripheral data to the image processing apparatus at early timing.

Second Embodiment

A second embodiment of the present invention is explained. The second embodiment is a microscope imaging system that acquires a plurality of layers of tiles (hereinafter referred to as z stack data) for each of state numbers (each of imaging areas) and stitches the tiles for each of the layers to thereby acquire a three-dimensional structure of an entire specimen. The microscope imaging system in the second embodiment includes the configuration similar to the configuration of the microscope imaging system in the first embodiment. However, the microscope imaging system in the second embodiment is different from the microscope imaging system in the first embodiment in that a work station is not used as an image processing apparatus and the image processing apparatus is mounted on an image processing board and in that the image processing apparatus performs lossless compression on peripheral data and transfers the peripheral data to the image processing apparatus.

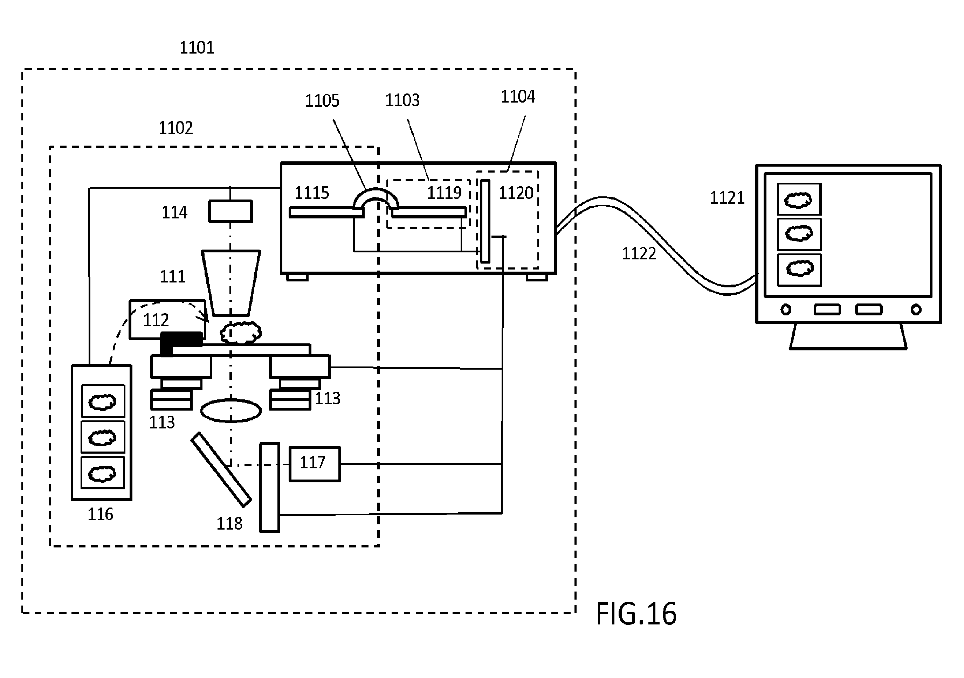

As shown in FIG. 16, a microscope imaging system 1101 in the second embodiment includes an imaging apparatus 1102 and an image processing apparatus 1103. The configuration of the imaging apparatus 1102 is the same as the configuration in the first embodiment (components same as the components in the first embodiment are denoted by reference numerals same as the reference numerals in FIG. 1). The image processing apparatus 1103 includes an image processing board 1119 present in a housing in which the imaging apparatus 1102 is present. An imaging processing board 1115 of the imaging apparatus 1102 and the image processing board 1119 are connected by a network cable 1105 and can bidirectionally transfer data. Unlike the first embodiment, a control apparatus 1104 is separate from the image processing apparatus 1103. A mother board of a PC is used as the control apparatus 1104. The control apparatus 1104 is also installed in the housing in which the imaging apparatus 1102 is installed. A display 1121 is connected to the microscope imaging system 1101 via a display cable 1122.

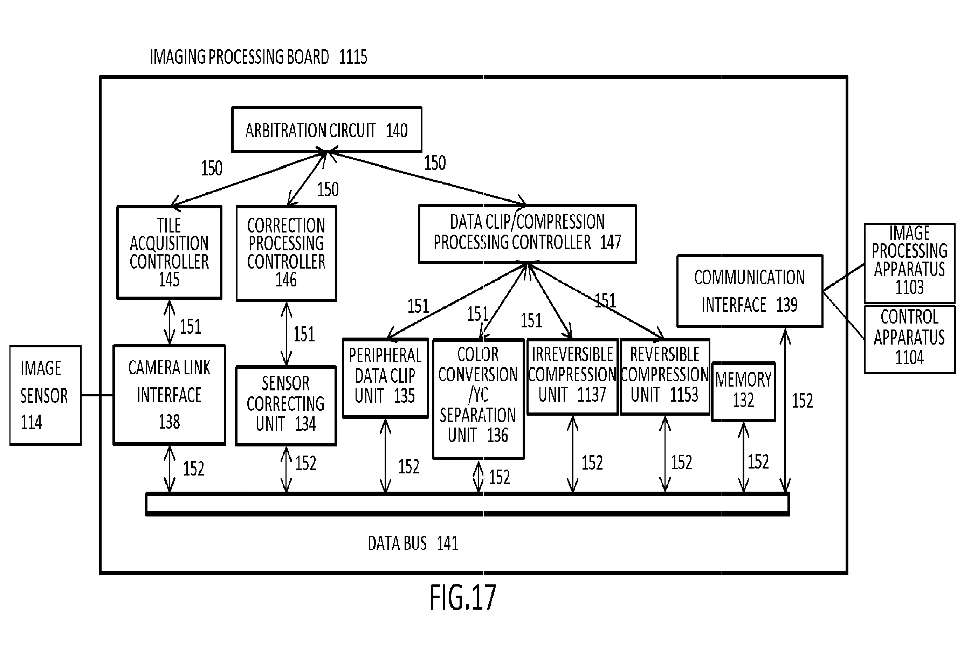

The configuration of the imaging processing board 1115 is explained with reference to FIG. 17. The imaging processing board 1115 includes a configuration substantially the same as the configuration of the imaging processing board 115 (FIG. 2) in the first embodiment. However, the imaging processing board 1115 is different from the imaging processing board 115 in that the imaging processing board 1115 includes a lossy compression unit 1137 and a lossless compression unit 1153. Constituent elements same as the constituent elements in the first embodiment are denoted by reference numerals same as the reference numerals used in the first embodiment and detailed explanation of the constituent elements is omitted.

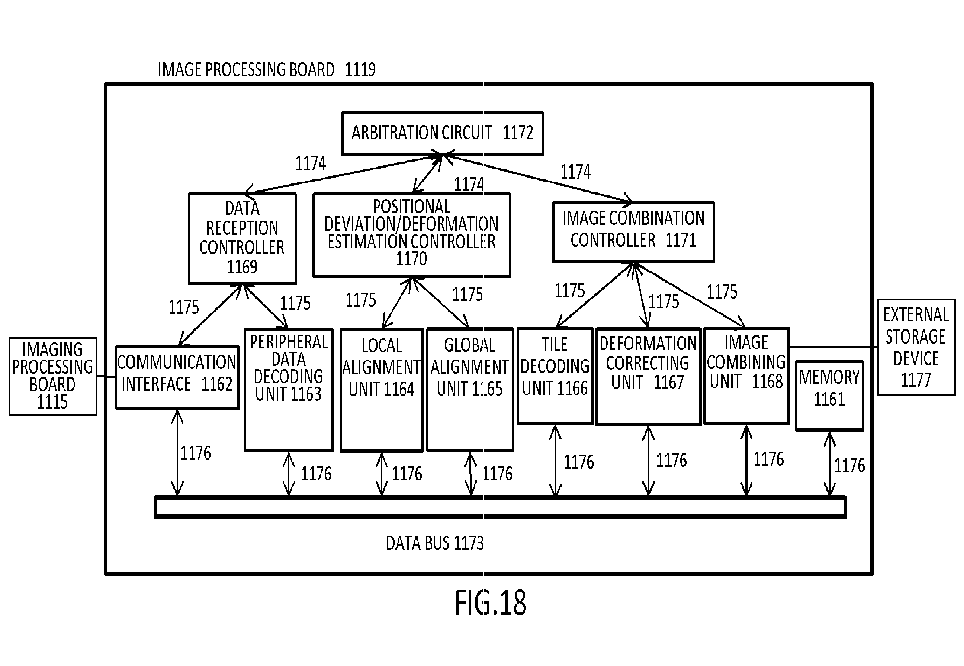

The configuration of the image processing board 1119 is explained with reference to FIG. 18. The image processing board 1119 includes a memory 1161, a communication interface 1162, a peripheral data decoding unit 1163, a local alignment unit 1164, a global alignment unit 1165, a tile decoding unit 1166, a deformation correcting unit 1167, and an image combining unit 1168. Further, the image processing board 1119 includes a data reception controller 1169, a positional deviation/deformation estimation controller 1170, and an image combination controller 1171. Reference numeral 1174 denotes a data bus control signal (an occupation permission signal, an occupation possibility inquiry, etc.). Reference numeral 1175 denotes a control signal (a processing start instruction, a processing completion notice, etc.). Reference numeral 1176 denotes a flow of data. After acquiring a data bus occupation permission signal from an arbitration circuit 1172, the controllers send a processing start instruction to constituent elements connected by a data bus 1173 and execute image processing for each of the constituent elements.

Acquisition of tiles

A flow of imaging in the microscope imaging system in this embodiment is substantially the same as the flow of imaging in the first embodiment shown in FIG. 3. Only the tile acquiring step 204 having contents different from the contents of the tile acquiring step 204 in the first embodiment is explained. In the tile acquiring step 204 in the second embodiment, heights (depths) of a plurality of layers for acquiring tiles are determined with reference to a focus position along z axis obtained in the focusing position detecting step 203. For example, layers may be set above and below the focus position along z axis or a plurality of layers may be set on the lower side (or the upper side) of the focus position along z axis. In the following explanation, the number of layers for acquiring tiles is referred to as "number of layers" and numbers of the layers are referred to as "layer numbers". Note that the interval between adjacent layers only has to be set smaller than the depth of field of the objective lens. In the tile acquiring step 204, the three-axis stage is driven to the heights of the layers and imaging is performed at the stage heights by switching the color filter with the electric filter wheel 118 to acquire single color tiles. In the first embodiment, the number of single color tiles corresponding to one state number (imaging area) is three. However, in this embodiment, the number of single color tiles corresponding to one state number is $3 \times H$ (H is the number of layers). Note that the focus position along z axis and the heights of the layers may be determined for each of the state numbers (for each of the imaging areas) or the same value may be used in all the state numbers (the imaging areas).

Image processing performed in the imaging apparatus

Image processing contents in the microscope imaging system in this embodiment are substantially the same as the image processing contents in the first embodiment. The imaging processing contents in the microscope imaging system in this embodiment are different from the image processing contents in the first embodiment in that the lossless compression unit 1153 is added to the constituent elements controlled by the data clip/compression processing controller 147 and lossless compression processing is added to the image processing.

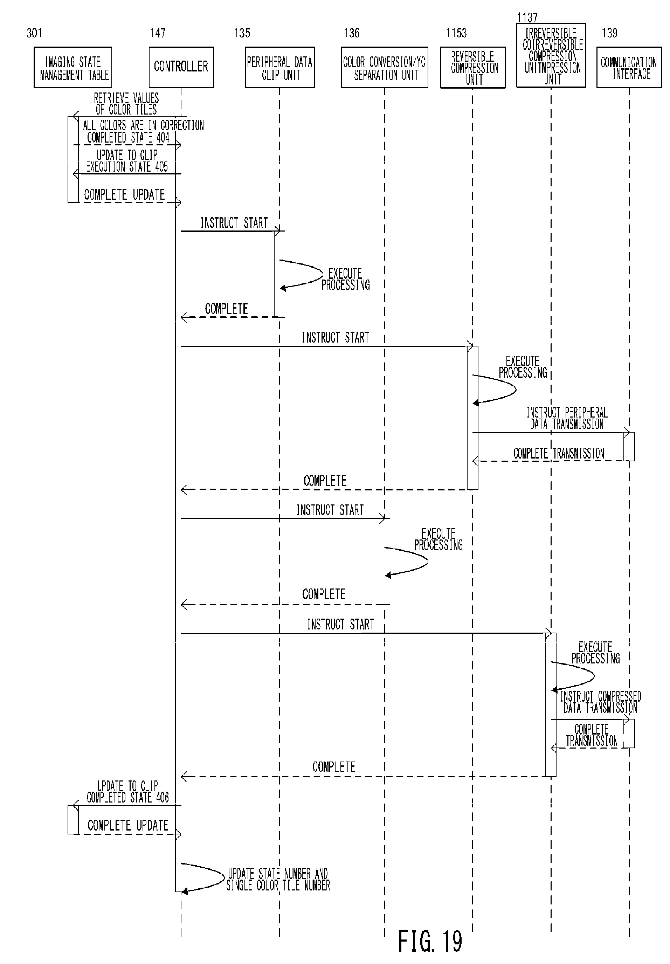

Data exchange among the constituent elements controlled by the data clip/compression processing controller 147 is explained with reference to FIG. 19. The data clip/compression processing controller 147 starts monitoring of the imaging state management table 301 simultaneously with the start of tile acquisition. The data clip/compression processing controller 147 retrieves, in order, values corresponding to a plurality of single color tile numbers belonging to the same state number and, when all the single color tile numbers are the correction completed state 404, starts work after updating the single color tile numbers to the clip execution state 405. For example, when the number of layers is H, single color tile numbers of the RGB colors corresponding to the state number p are 3Hp, 3Hp+1, ..., 3Hp+3H-2, and 3Hp+3H-1.

First, the controller 147 sends a top address of a single color tile after sensor correction having a specific color and a specific layer number to the peripheral data clip unit 135 and instructs execution of peripheral data clip processing. A color of the single color tile after sensor correction can be arbitrarily selected as in the first embodiment. The specific layer number can also be arbitrarily selected. However, it is desirable to select a layer number of a layer including a fine texture or a layer having high contrast. For example, it is desirable to select a layer number of a layer present at the same height as the focus position along z axis obtained in the focusing position detecting step 203.

Peripheral data, which is a product of the peripheral data clip processing, is transmitted to the lossless compression unit 1153 and subjected to lossless compression processing explained below. The peripheral data after the lossless compression is transferred to the image processing apparatus 1103 through the network. Note that, in this embodiment, the peripheral data of only one layer is used. However, peripheral data of two or more layers can also be used. Alternatively, the peripheral data of the two or more layers may be combined (e.g., depth-combined) to create peripheral data having high contrast.

Color conversion processing executed by the color conversion/YC separation unit 136 is the same as the color conversion processing in the first embodiment. The tile after YC separation is sent to the lossy compression unit 1137 and lossy compression processing is executed. The lossy compression processing is the JPEG compression of the DCT system as in the first embodiment. A compressed tile, which is output data of the lossy compression unit 1137, is transferred to the image processing apparatus 1103 through the communication interface 139. After the transfer, the value of the imaging state management table 301 is updated to 5 (the clip completed state 406), a single color tile number set as a monitoring target is increased by 3H (H is the number of layers), and the monitoring is continued.

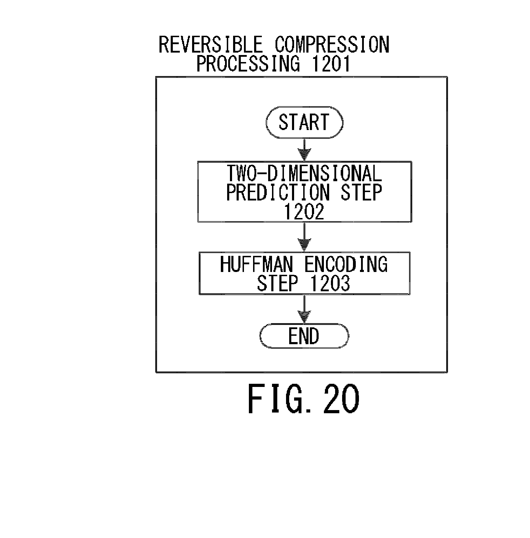

Reversible compression processing 1201 performed by the lossless compression unit 1153 is explained with reference to a flowchart of FIG. 20. The lossless compression processing 1201 is JPEG compression processing of a spatial system. Since the JPEG compression processing of the spatial system is generally well known, details of steps are omitted and only an overview is explained. In a two-dimensional prediction step 1202, a predicted value by a neighboring pixel is calculated in pixels in the peripheral data. In a Huffman encoding step 1203, Huffman encoding is executed according to a difference between the predicted value and a pixel value. As a result, peripheral data subjected to lossy compression is obtained.

Image processing performed in the image processing apparatus

Unlike the first embodiment, image processing performed in the image processing apparatus 1103 in this embodiment is executed by cooperation of the constituent elements on the image processing board 1119. However, processing contents are substantially the same as the processing contents in the first embodiment.

As in the first embodiment, a process management table, two kinds of alignment management tables, a state number link table, and a global alignment execution state variable are allocated to the memory 1161 of the image processing apparatus 1103. The process management table, the alignment management tables, the state number link table, and the global alignment execution state variable are used for process control.

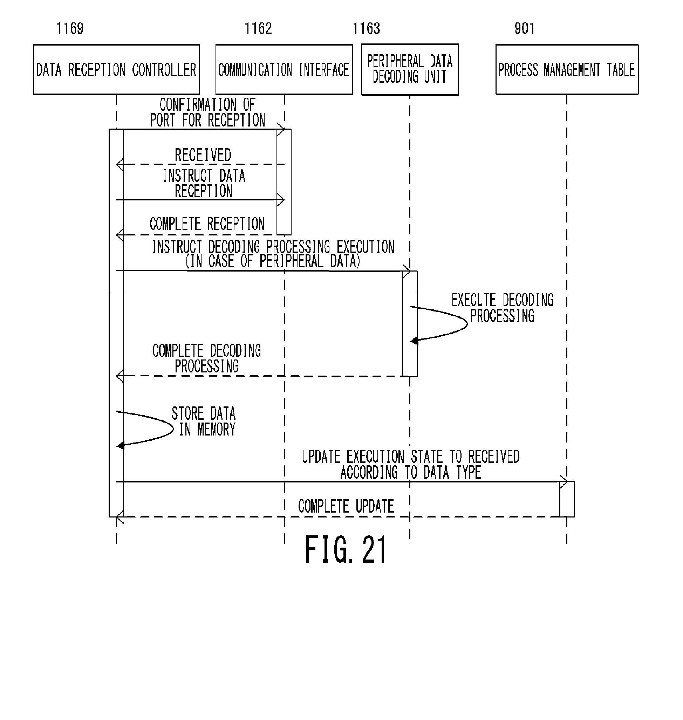

The data exchange performed concerning the data receiving process, the positional deviation/deformation estimating process, and the image combining process in the first embodiment is performed by the data reception controller 1169, the positional deviation/deformation estimation controller 1170, and the image combination controller 1171. The data exchange performed by the data reception controller 1169, the positional deviation/deformation estimation controller 1170, and the image combination controller 1171 is explained with reference to FIGS. 21, 22, and 23.

The data exchange performed between the data reception controller 1169 and the constituent elements is explained with reference to FIG. 21. The data reception controller 1169 monitors a specific port of the communication interface 1162 and receives data (peripheral data after lossless compression or a compressed tile) transmitted by the imaging apparatus 1102. In the case of the compressed tile, the data reception controller 1169 directly stores data in the memory 1161 and updates the value of the process management table 901 to 2 (the compressed tile received state 923). On the other hand, in the case of the peripheral data after lossless compression, the data reception controller 1169 sends the peripheral data after lossless compression to the peripheral data decoding unit 1163 and executes lossless decoding processing explained below. The resulting peripheral data is stored in the memory 1161. Thereafter, the data reception controller 1169 updates the value of the process management table 901 to 1 (the peripheral data received state 922). After the end of the data exchange, the data reception controller 1169 returns to the port monitoring state.

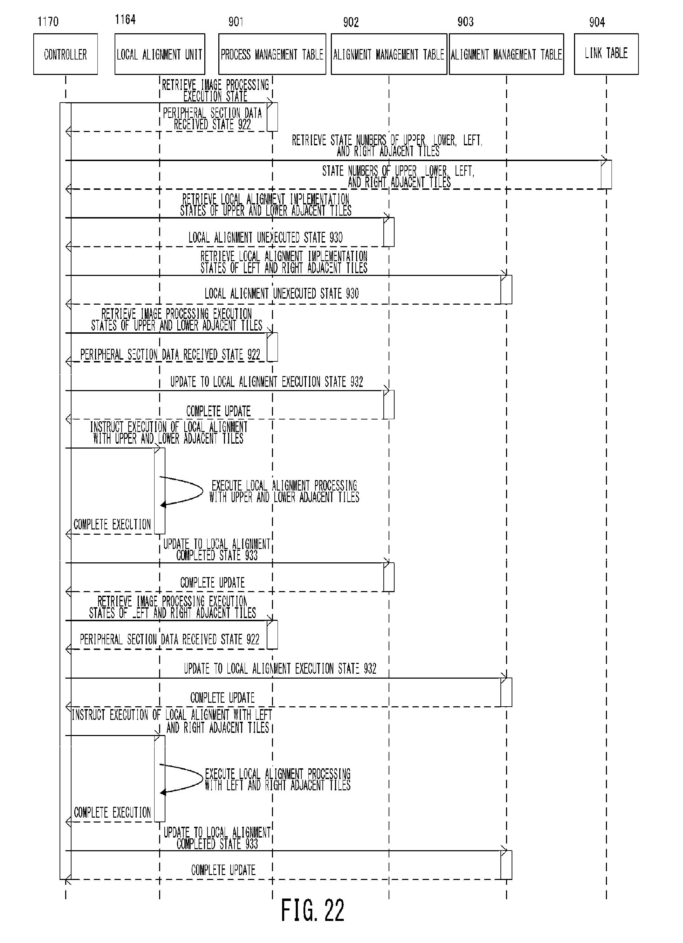

The data exchange performed between the positional deviation/deformation estimation controller 1170 and the constituent elements is explained with reference to FIG. 22. The positional deviation/deformation estimation controller 1170 includes a register that retains the target state number explained in the first embodiment. When the operation of the positional deviation/deformation estimation controller 1170 is started, the register is initialized to 0 or a predetermined value. After positional deviation/deformation estimation processing for the target state number is completed, the value of the register is increased by a fixed value and updated.

The data exchange between the positional deviation/deformation estimation controller 1170 and the constituent elements is the same as the data exchange performed between the positional deviation/deformation estimating process 1002 and the constituent elements in the first embodiment. Local alignment processing and global alignment processing are executed using the local alignment unit 1164 and the global alignment unit 1165.

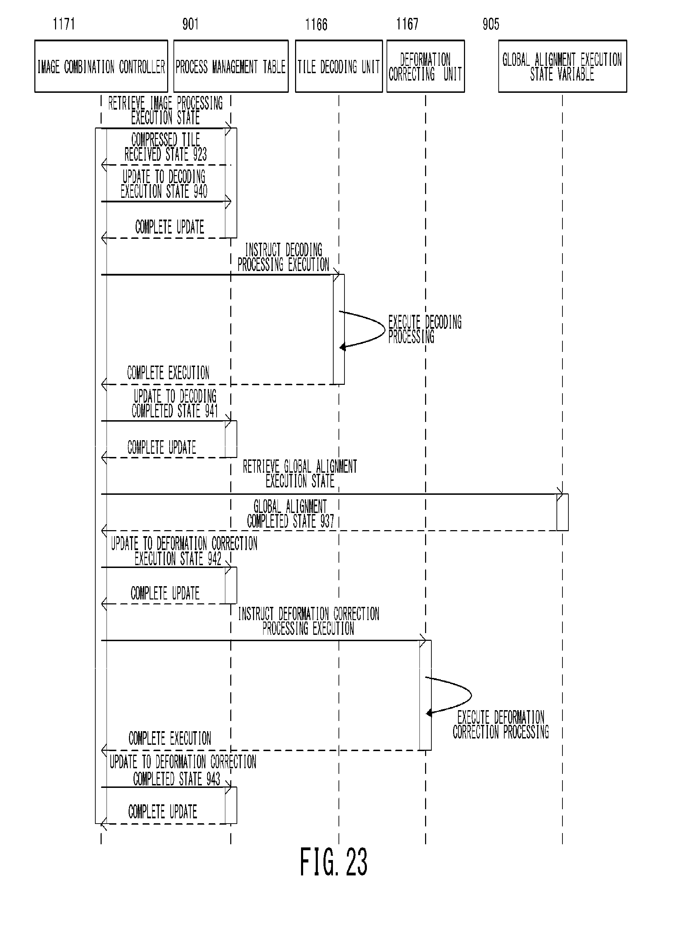

The data exchange performed between the image combination controller 1171 and the constituent elements is explained with reference to FIG. 23. The image combination controller 1171 also includes a register that retains the target state number explained in the first embodiment. The image combination controller 1171 performs initialization and update as in the first embodiment. In a data exchange procedure, the image combining process 1003 in FIG. 12 is replaced with the image combination controller 1171. Decoding processing and deformation correction processing are executed in the tile decoding unit 1166 and the deformation correcting unit 1167. Image combination processing is executed by the image combining unit 1168.

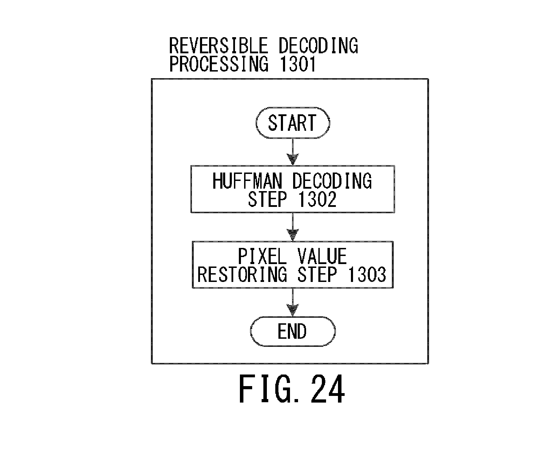

Contents of individual processing are substantially the same as the contents in the first embodiment. However, the contents of the individual processing is different from the contents in the first embodiment in that lossless decoding processing 1301 shown in FIG. 24 is executed in the peripheral data decoding unit 1163. Since the lossless decoding processing 1301 is generally well known, details of steps are omitted. In a Huffman decoding step 1302, inverse operation of the Huffman encoding performed during compression is performed on losslessly-compressed peripheral data to obtain a difference value between a predicted value and a pixel value. In a pixel value restoring step 1303, the pixel value is restored from a code sequence obtained in two-dimensional prediction during compression and the difference value.

The contents of the individual processing is also different from the contents in the first embodiment in that a file format of image data after combination, which is an output file of the image combination processing, needs to be associated with the z stack data. For example, when a display program is adapted to depth switching, a format in which JPEG compression data different for each of layers are collected in one ZIP compression folder is adopted.

As explained above, it is possible to generate image data after combination, which is an output of the microscope imaging system. The image data after combination is stored in the memory 1161 or an external storage 1177.

In this way, in the second embodiment of the present invention, the peripheral data of the tile of one layer in the z stack data is transferred to the image processing apparatus in a state in which the lossless compression is performed on the peripheral data. The image data is transferred to the image processing apparatus in a state in which the image data is the image data is lossily compressed. The image processing apparatus obtains compressed data on the basis of a positional deviation/deformation amount estimated using the decoded peripheral data. With this configuration, it is possible to perform accurate stitching and high-speed processing of the z stack data while keeping the hardware size of the imaging apparatus small.

In this embodiment, as in the first embodiment, the transfer of the peripheral data from the imaging apparatus to the image processing apparatus and the transfer of the compressed tile are asynchronously performed. Therefore, the image processing apparatus can start the image combination processing immediately after receiving the compressed tile from the imaging apparatus. Consequently, efficient (i.e., high-speed) stitching is realized. In particular, in this embodiment, since the peripheral data is subjected to the lossless compression and transferred, it is possible to reduce a transfer amount and a transfer time of the peripheral data.

Further, only the peripheral data for one layer is transferred and used in common for the stitching of the z stack data of a plurality of layers. Therefore, it is possible to reduce a transfer amount and a transfer time of the peripheral data and reduce a load of the positional deviation/deformation estimation processing.

Third Embodiment

A third embodiment is explained. The third embodiment is an imaging apparatus and is characterized by having a function of, after performing divided imaging, transmitting a tile subjected to lossy compression and peripheral data subjected to the lossy compression. The configuration of the imaging apparatus in the third embodiment is substantially the same as the configuration of the imaging apparatus in the first embodiment.

However, the imaging apparatus in the third embodiment is different from the imaging apparatus in the first embodiment in that lossy compression processing is executed in an image processing board after peripheral data clip.

Since the apparatus configuration is the same as the configuration of the imaging apparatus 102 shown in FIG. 1, explanation of the apparatus configuration is omitted. The configuration of the imaging processing board is the same as the configuration shown in FIG. 2. However, data exchange among the constituent elements performed by the data clip/compression processing controller 147 is different.

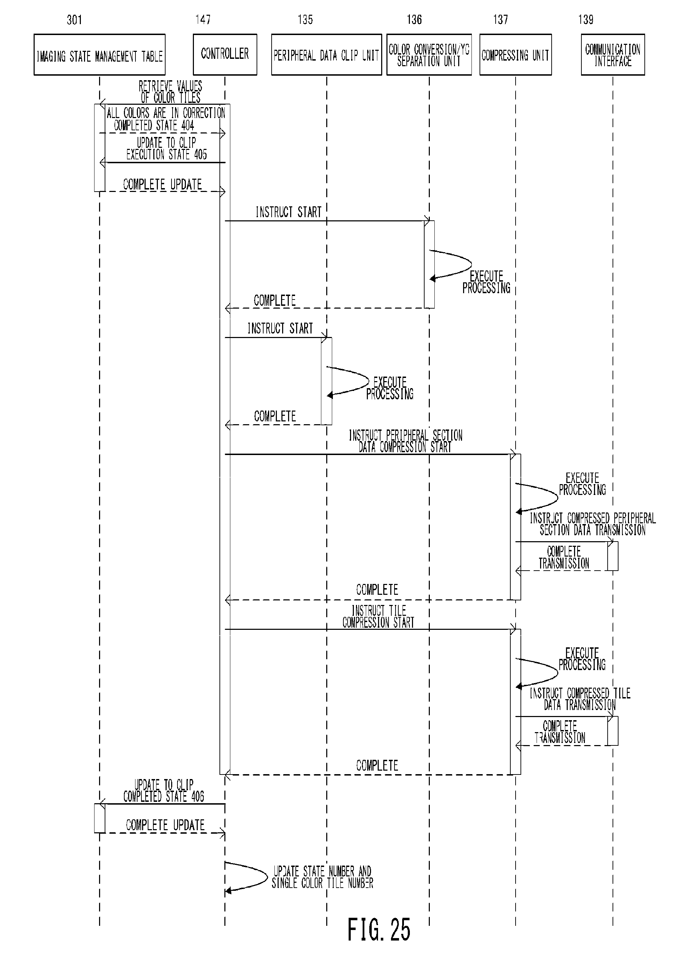

The data exchange among the constituent elements in this embodiment is explained with reference to FIG. 25. Before the peripheral data clip processing by the peripheral data clip unit 135, the data clip/compression processing controller 147 instructs the color conversion/YC separation unit 136 to execute the color conversion processing and the YC separation processing. Subsequently, the data clip/compression processing controller 147 instructs the peripheral data clip unit 135 to execute the peripheral data clip processing for a brightness component (a Y component) after YC separation.

After receiving an execution completion notice of the peripheral data clip processing, the data clip/compression processing controller 147 instructs the compressing unit 137 to execute the lossy compression processing for the brightness component after the peripheral data clip processing. A compression ratio for the peripheral data is set to be larger than a compression ratio for the compressed tile (such that a reduction rate of information is small compared with the compressed tile). In a simulation result in the past, when a compression ratio of JPEG compression was 27%, a probability of failure in positional deviation estimation was about 1% and a probability of failure at a compression ratio of 4% was about 10%. Since a compression ratio of the compress tile is often set to about 5%, by setting the compression ratio for the peripheral data to about 6 to 30%, a success ratio of positional deviation estimation increases and accuracy of stitching is also improved. After the execution of the lossy compression processing, the compressing unit 137 transmits the peripheral data after compression to the outside through the communication interface.

Processing for the tile after YC separation to be successively performed is the same as the processing in the first embodiment.

In this way, the third embodiment of the present invention is the imaging apparatus characterized by capturing divided images and performing the lossy compression on the divided images and peripheral data of the divided images at different compression ratios. Although subjected to the lossy compression, since a reduction rate of information is small, the peripheral data with little artifact can be used. Therefore, an external apparatus can execute highly accurate stitching processing. There is also an advantage that it is possible to reduce a transfer amount and a transfer time of the peripheral data compared with the first embodiment (non-compression) and the second embodiment (lossless compression).

Fourth Embodiment

A fourth embodiment of the present invention is explained. The fourth embodiment is an image processing apparatus that highly accurately executes, on the basis of lossily compressed divided image and peripheral data, stitching for divided images. The configuration of the image processing apparatus is the same as the configuration of the image processing apparatus in the first embodiment.

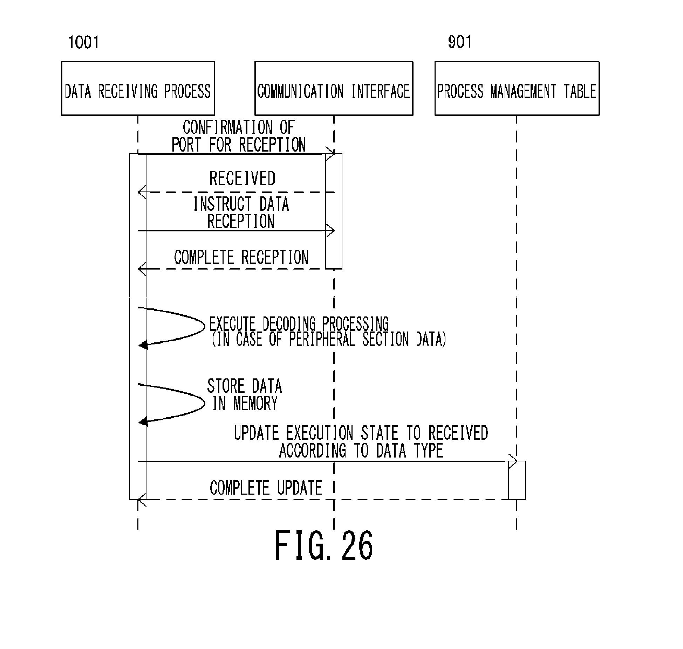

Image processing contents are also substantially the same as the image processing contents in the first embodiment. However, as shown in FIG. 26, processing concerning a data receiving process is different. The data receiving process determines a data type after receiving data from the communication interface and, when the received data is peripheral data after compression, carries out lossy decoding processing. The peripheral data after decoding is stored in the memory. This embodiment is based on the premise that, as in the data transmitted by the imaging apparatus in the third embodiment, a rate of an information reduction of lossy compression processing performed on peripheral data is lower than a rate of an information reduction of lossy compression processing performed on a tile. Since information is not reduced from the peripheral data after decoding, it is possible to highly accurately execute positional deviation/deformation amount estimation from the peripheral data. As a result, it is possible to generate a highly accurate combined image.

In this way, the fourth embodiment of the present invention is the image processing apparatus that can highly accurately stitch tiles by performing the positional deviation/deformation amount estimation for the tiles on the basis of the lossily compressed peripheral data.

Other embodiments

The configurations explained in the embodiments can be combined as appropriate. For example, in the configuration of the imaging system (FIG. 1) in the first embodiment, the imaging and the combination of the z stack data in the second embodiment can be performed. The lossless compression of the peripheral data in the second embodiment and the lossy compression of the peripheral data in the third and fourth embodiments may be performed. In the configuration of the imaging system (FIG. 16) in the second embodiment, the imaging and the combination of the single layer in the first embodiment can be performed. The peripheral data may be non-compressed as in the first embodiment or the lossy compression of the peripheral data may be performed as in the third and fourth embodiments. The imaging apparatus in the third embodiment may non-compress or losslessly compress the peripheral data. In that case, the image processing apparatus in the fourth embodiment only has to change processing according to presence or absence of compression of the peripheral data or a compression form.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A imaging apparatus images a plurality of areas of an object such that end portions of adjacent areas overlap each other and generates, for each of the plurality of areas, image data of the area and peripheral data, which is data of an overlapping portion of the area and an area adjacent to the area and lossily compresses the image data. A image processing apparatus acquires the lossily compressed image data and the peripheral data of each of the plurality of areas and determines, using peripheral data of adjacent two areas, a parameter used for stitching image data of the two areas and decodes the lossily compressed image data and stitches the decoded image data of the plurality of areas using the parameter.

**Claims**

1. An imaging system comprising:

an imaging apparatus; and
an image processing apparatus, wherein
the imaging apparatus includes:

an imaging unit that images a plurality of areas of an object such that end portions of adjacent areas overlap each other;
a generating unit that generates, for each of the plurality of areas, from data obtained by the imaging unit, image data of the area and peripheral data, which is data of an overlapping portion of the area and an area adjacent to the area; and
a lossy compression unit that lossily compresses the image data, and
the image processing apparatus includes:

an acquiring unit that acquires the lossily compressed image data and the peripheral data of each of the plurality of areas;
a determining unit that determines, using peripheral data of adjacent two areas, a parameter used for stitching image data of the two areas; and
a combining unit that decodes the lossily compressed image data and stitches the decoded image data of the plurality of areas using the parameter determined by the determining unit.

2. The imaging system according to claim 1, wherein
the imaging apparatus and the image processing apparatus are connected by a data transmission line, and
the lossily compressed image data and the peripheral data are transmitted from the imaging apparatus to the image processing apparatus via the data transmission line.

3. The imaging system according to claim 2, wherein
the peripheral data is transmitted from the imaging apparatus to the image processing apparatus earlier than the lossily compressed image data; and
determination processing for the parameter is performed by the determining unit by making use of time in which the generation, the lossy compression, and the transmission to the image processing apparatus of the image data are performed in the imaging apparatus.

4. The imaging system according to claim 2 or 3, wherein the peripheral data is transmitted from the imaging apparatus to the image processing apparatus without being subjected to compression processing.

5. The imaging system according to claim 2 or 3, wherein
the imaging apparatus further includes a lossless compression unit that losslessly compresses the peripheral data, and
the peripheral data is losslessly compressed by the lossless compression unit and transmitted from the imaging apparatus to the image processing apparatus.

6. The imaging system according to claim 2 or 3, wherein
the imaging apparatus further includes a second lossy compression unit that performs, on the peripheral data, lossy compression in which data is less reduced than in the lossy compression by the lossy compression unit, and
the peripheral data is lossily compressed by the second lossy compression unit and transmitted from the imaging apparatus to the image processing apparatus.

7. The imaging system according to any one of claims 1 to 6, wherein the peripheral data is data of a single color.

8. The imaging system according to any one of claims 1 to 7, wherein
the imaging unit performs imaging of a plurality of layers for each of the plurality of areas,
the generating unit generates, from data obtained by the imaging unit, a plurality of image data corresponding to the plurality of layers and peripheral data corresponding to only one layer, and
a parameter determined using the peripheral data corresponding to only the one layer is used for stitching for image data of the plurality of layers.

9. An imaging apparatus comprising:

an imaging unit that images a plurality of areas of an object such that end portions of adjacent areas overlap each other;
a generating unit that generates, for each of the plurality of areas, from data obtained by the imaging unit, image data of the area and peripheral data, which is data of an overlapping portion of the area and an area adjacent to the area;
a lossy compression unit that lossily compresses the image data; and
an output unit that outputs the lossily compressed image data and the peripheral data.

10. The imaging apparatus according to claim 9, wherein the peripheral data is used for determining a parameter used for stitching image data of the plurality of areas in the image processing apparatus.

11. The imaging apparatus according to claim 10, wherein the output unit outputs the peripheral data earlier than the lossily compressed image data such that the image processing apparatus can execute processing for determining the parameter by making use of time in which the generation, the lossy compression, and the output of the image data are performed.

12. The imaging apparatus according to any one of claims 9 to 11, wherein
the imaging unit performs imaging of a plurality of layers for each of the plurality of areas,
the generating unit generates, from data obtained by the imaging unit, a plurality of image data corresponding to the plurality of layers and peripheral data corresponding to only one layer, and
the output unit outputs the plurality of lossily compressed image data and the peripheral data corresponding to only the one layer.

13. An image processing apparatus comprising:

an acquiring unit that acquires, for each of a plurality of areas of an object that are set such that end portions of adjacent areas overlap each other, lossily compressed image data and peripheral data, which is data of an overlapping portion of the adjacent areas;
a determining unit that determines, using peripheral data of adjacent two areas, a parameter used for stitching image data of the two areas; and
a combining unit that decodes the lossily compressed image data and stitches the decoded image data of the plurality of areas using the parameter determined by the determining unit.

14. The image processing apparatus according to claim 13, wherein
the acquiring unit acquires the peripheral data earlier than the lossily compressed image data, and
the determining unit performs determination processing for the parameter by making use of time before the lossily compressed image data can be acquired.

15. The image processing apparatus according to claim 13 or 14, wherein
the acquiring unit acquires, for each of the plurality of areas, a plurality of lossily compressed image data corresponding to a plurality of layers and peripheral data corresponding to only one layer, and
the determining unit determines, using the peripheral data corresponding to only the one layer, a parameter used for stitching image data of the plurality of layers.

FIG.1

IMAGING PROCESSING BOARD 115

FIG.2

START

STATE TABLE CREATING
STEP 201

STAGE DRIVING
STEP 202

FOCUSING POSITION
DETECTING STEP
203

TILE ACQUIRING
STEP 204

S=S+1

STATE NUMBER S
IS MAXIMUM?

NO

YES

END

FIG.3

FIG. 4

**301** IMAGING STATE MANAGEMENT TABLE   **146** CONTROLLER   **134** SENSOR CORRECTING UNIT

RETRIEVE VALUE OF SINGLE COLOR TILE NUMBER a

ACQUISITION COMPLETED STATE 402

UPDATE TO CORRECTION EXECUTION STATE 403

COMPLETE_UPDATE

INSTRUCT CORRECTION PROCESSING EXECUTION

EXECUTE CORRECTION PROCESSING

COMPLETE CORRECTION PROCESSING EXECUTION

UPDATE TO CORRECTION COMPLETED STATE 404

COMPLETE UPDATE

ADD 1 TO SINGLE COLOR TILE NUMBER a

## FIG. 5

EP 2 908 286 A1

FIG. 6

IMAGING STATE
MANAGEMENT
TABLE   301

| SINGLE COLOR TILE NUMBER | IMAGING STATE |
|---|---|
| 0 | 2 |
| 1 | 1 |
| 2 | 1 |
| ... | ... |
| N | 0 |

0 → UN-ACQUIRED STATE 401
1 → ACQUISITION COMPLETED STATE 402
2 → CORRECTION EXECUTION STATE 403
3 → CORRECTION COMPLETED STATE 404
4 → CLIP EXECUTION STATE 405
5 → CLIP COMPLETED STATE 406

FIG.7

SENSOR CORRECTION PROCESSING 501

```
        ┌──────────┐
        │  START   │
        └────┬─────┘
             ↓
   ┌───────────────────────┐
   │  FLAW AND DEFECT       │
   │ CORRECTING STEP 502    │
   └───────────┬───────────┘
             ↓
   ┌───────────────────────┐
   │  PATTERN NOISE         │
   │ SUPPRESSING STEP 503   │
   └───────────┬───────────┘
             ↓
   ┌───────────────────────┐
   │        GAIN            │
   │     ADJUSTING          │
   │      STEP 504          │
   └───────────┬───────────┘
             ↓
   ┌───────────────────────┐
   │    ILLUMINATION        │
   │    UNEVENNESS          │
   │    CORRECTION          │
   │        505             │
   └───────────┬───────────┘
             ↓
   ┌───────────────────────┐
   │ DISTORTION/ROTATION    │
   │ CORRECTING STEP 506    │
   └───────────┬───────────┘
             ↓
        ┌──────────┐
        │   END    │
        └──────────┘
```

FIG.8A

PERIPHERAL DATA CLIP PROCESSING 601

```
        ┌──────────┐
        │  START   │
        └────┬─────┘
             ↓
   ┌───────────────────────┐
   │   CLIP STEP 602        │
   └───────────┬───────────┘
             ↓
   ┌───────────────────────┐
   │  HEADER INFORMATION    │
   │  ADDING STEP 603       │
   └───────────┬───────────┘
             ↓
        ┌──────────┐
        │   END    │
        └──────────┘
```

FIG.8B

M PIXELS       M PIXELS       N PIXELS

N PIXELS

FIG.8C

EP 2 908 286 A1

COLOR CONVERSION/YC SEPARATION
PROCESSING 701

```
        ( START )
            │
            ▼
        ┌─────────┐
        │  COLOR  │
        │CORRECTING│
        │STEP 702 │
        └─────────┘
            │
            ▼
   ┌──────────────────┐
   │BRIGHTNESS AND COLOR│
   │    DIFFERENCE    │
   │SEPARATING STEP 703│
   └──────────────────┘
            │
            ▼
   ┌──────────────────┐
   │ COLOR DIFFERENCE │
   │COMPONENT SAMPLING STEP│
   │       704        │
   └──────────────────┘
            │
            ▼
        (  END  )
```

## FIG.9A

COMPRESSION PROCESSING 801

```
        ( START )
            │
            ▼
   ┌──────────────┐
   │ DCT STEP 802 │
   └──────────────┘
            │
            ▼
   ┌──────────────┐
   │  QUANTIZING  │
   │   STEP 803   │
   └──────────────┘
            │
            ▼
   ┌──────────────────┐
   │ HUFFMAN ENCODING │
   │     STEP 804     │
   └──────────────────┘
            │
            ▼
   ┌──────────────────┐
   │ HEADER INFORMATION│
   │  ADDING STEP 805  │
   └──────────────────┘
            │
            ▼
        (  END  )
```

## FIG. 9B

1001                                                                901

```
┌──────────────────────┐  ┌───────────────────────┐  ┌──────────────────────────┐
│DATA RECEIVING PROCESS│  │COMMUNICATION INTERFACE│  │ PROCESS MANAGEMENT TABLE │
└──────────────────────┘  └───────────────────────┘  └──────────────────────────┘
```

CONFIRMATION OF PORT
FOR RECEPTION

RECEIVED

INSTRUCT DATA RECEPTION

COMPLETE RECEPTION

STORE DATA IN
MEMORY

UPDATE EXECUTION STATE TO RECEIVED
ACCORDING TO DATA TYPE

COMPLETE UPDATE

# FIG. 10

FIG. 11

1003        901        905

| IMAGE COMBINING PROCESS | PROCESS MANAGEMENT TABLE | GLOBAL ALIGNMENT EXECUTION STATE VARIABLE |
|---|---|---|

RETRIEVE IMAGE PROCESSING EXECUTION STATE

COMPRESSED TILE RECEIVED STATE 923

UPDATE TO DECODING EXECUTION STATE 940

COMPLETE UPDATE

EXECUTE DECODING PROCESSING

UPDATE TO DECODING COMPLETED STATE 941

COMPLETE UPDATE

RETRIEVE GLOBAL ALIGNMENT EXECUTION STATE

GLOBAL ALIGNMENT COMPLETED STATE 937

UPDATE TO DEFORMATION CORRECTION EXECUTION STATE 942

COMPLETE UPDATE

EXECUTE DEFORMATION CORRECTION PROCESSING

UPDATE TO DEFORMATION CORRECTION COMPLETED STATE 943

COMPLETE UPDATE

FIG. 12

**FIG.13A**

PROCESS MANAGEMENT TABLE 901

| STATE NUMBER | EXECUTION STATE |
|---|---|
| 0 | 2 |
| 1 | 1 |
| 2 | 1 |
| ... | ... |
| N | 0 |

0 → UN-ACQUIRED STATE 921
1 → PERIPHERAL DATA RECEIVED STATE 922
2 → COMPRESSED TILE RECEIVED STATE 923
3 → DECODING EXECUTION STATE 940
4 → DECODING COMPLETED STATE 941
5 → DEFORMATION CORRECTION EXECUTION STATE 942
6 → DEFORMATION CORRECTION COMPLETED STATE 943

**FIG.13B**

ALIGNMENT MANAGEMENT TABLE 902, 903

| STATE NUMBER | EXECUTION STATE |
|---|---|
| 0 | 2 |
| 1 | 1 |
| 2 | 1 |
| ... | ... |
| N | 0 |

0 → LOCAL ALIGNMENT UNEXECUTED STATE 930
1 → LOCAL ALIGNMENT UNEXECUTABLE STATE 931
2 → LOCAL ALIGNMENT EXECUTION STATE 932
3 → LOCAL ALIGNMENT COMPLETED STATE 933

**FIG.13C**

STATE NUMBER LINK TABLE 904

| STATE NUMBER | STATE NUMBER (UPPER) | STATE NUMBER (LOWER) | STATE NUMBER (LEFT) | STATE NUMBER (RIGHT) |
|---|---|---|---|---|
| 0 | None | M | None | 1 |
| 1 | None | M+1 | 0 | 2 |
| 2 | None | M+2 | 1 | 3 |
| ... | ... | ... | ... | ... |
| N | N-M | None | N-1 | None |

**FIG.13D**

GLOBAL ALIGNMENT EXECUTION STATE VARIABLE 905

| EXECUTION STATE |
|---|
| 1 |

0 → GLOBAL ALIGNMENT UNEXECUTED STATE 935
1 → GLOBAL ALIGNMENT EXECUTION STATE 936
2 → GLOBAL ALIGNMENT COMPLETED STATE 937

PERIPHERAL DATA (REGION INDICATED BY WHITE)

PATCH

FIG.14

LOCAL ALIGNMENT PROCESSING 1011

```
START
  ↓
PATCH POSITIONAL
DEVIATION DETECTING
STEP 1012
  ↓
POSITIONAL DEVIATION/
DEFORMATION PARAMETER
ESTIMATING STEP 1013
  ↓
END
```

FIG.15A

GLOBAL ALIGNMENT PROCESSING 1021

```
START
  ↓
INITIAL VALUE
CALCULATING STEP
1022
  ↓
OPTIMIZING
STEP 1023
  ↓
END
```

FIG.15B

DECODING PROCESSING 1031

```
START
  ↓
HUFFMAN
DECODING STEP
1032
  ↓
INVERSE
QUANTIZING
STEP 1033
  ↓
IDCT STEP 1034
  ↓
END
```

FIG. 15C

DEFORMATION CORRECTION PROCESSING 1041

```
START
  ↓
AFFINE
TRANSFORMATION
STEP 1042
  ↓
MAGNIFICATION
CONVERTING
STEP 1043
  ↓
GAMMA CORRECTION
STEP 1044
  ↓
END
```

FIG. 15D

IMAGE COMBINATION PROCESSING 1051

```
START
  ↓
IMAGE DATA
COLLECTING STEP
1052
  ↓
SHAPING STEP
1053
  ↓
END
```

FIG. 15E

FIG.16

IMAGING PROCESSING BOARD 1115

FIG.17

EP 2 908 286 A1

FIG.18

FIG. 19

REVERSIBLE COMPRESSION
PROCESSING 1201

```
        ( START )
            │
            ▼
  ┌─────────────────────┐
  │   TWO-DIMENSIONAL    │
  │   PREDICTION STEP    │
  │        1202         │
  └─────────────────────┘
            │
            ▼
  ┌─────────────────────┐
  │  HUFFMAN ENCODING    │
  │     STEP 1203        │
  └─────────────────────┘
            │
            ▼
        (  END  )
```

FIG. 20

| 1169 | 1162 | 1163 | 901 |
|---|---|---|---|
| DATA RECEPTION CONTROLLER | COMMUNICATION INTERFACE | PERIPHERAL DATA DECODING UNIT | PROCESS MANAGEMENT TABLE |

CONFIRMATION OF PORT FOR RECEPTION

RECEIVED

INSTRUCT DATA RECEPTION

COMPLETE RECEPTION

INSTRUCT DECODING PROCESSING EXECUTION (IN CASE OF PERIPHERAL DATA)

EXECUTE DECODING PROCESSING

COMPLETE DECODING PROCESSING

STORE DATA IN MEMORY

UPDATE EXECUTION STATE TO RECEIVED ACCORDING TO DATA TYPE

COMPLETE UPDATE

# FIG. 21

FIG. 22

1171      901      1166      1167      905

| IMAGE COMBINATION CONTROLLER | PROCESS MANAGEMENT TABLE | TILE DECODING UNIT | DEFORMATION CORRECTING UNIT | GLOBAL ALIGNMENT EXECUTION STATE VARIABLE |

RETRIEVE IMAGE PROCESSING EXECUTION STATE

COMPRESSED TILE RECEIVED STATE 923

UPDATE TO DECODING EXECUTION STATE 940

COMPLETE UPDATE

INSTRUCT DECODING PROCESSING EXECUTION

EXECUTE DECODING PROCESSING

COMPLETE EXECUTION

UPDATE TO DECODING COMPLETED STATE 941

COMPLETE UPDATE

RETRIEVE GLOBAL ALIGNMENT EXECUTION STATE

GLOBAL ALIGNMENT COMPLETED STATE 937

UPDATE TO DEFORMATION CORRECTION EXECUTION STATE 942

COMPLETE UPDATE

INSTRUCT DEFORMATION CORRECTION PROCESSING EXECUTION

EXECUTE DEFORMATION CORRECTION PROCESSING

COMPLETE EXECUTION

UPDATE TO DEFORMATION CORRECTION COMPLETED STATE 943

COMPLETE UPDATE

FIG. 23

REVERSIBLE DECODING
PROCESSING 1301

```
        ( START )
            │
            ▼
  ┌─────────────────────┐
  │  HUFFMAN DECODING    │
  │     STEP 1302        │
  └─────────────────────┘
            │
            ▼
  ┌─────────────────────┐
  │    PIXEL VALUE       │
  │ RESTORING STEP 1303  │
  └─────────────────────┘
            │
            ▼
        (  END  )
```

# FIG. 24

FIG. 25

1001                                                                    901

```
┌──────────────────────┐  ┌──────────────────────┐  ┌──────────────────────────┐
│DATA RECEIVING PROCESS│  │COMMUNICATION INTERFACE│ │PROCESS MANAGEMENT TABLE │
└──────────────────────┘  └──────────────────────┘  └──────────────────────────┘
```

CONFIRMATION OF
PORT FOR RECEPTION

RECEIVED

INSTRUCT DATA
RECEPTION

COMPLETE RECEPTION

EXECUTE DECODING PROCESSING
(IN CASE OF PERIPHERAL SECTION DATA)

STORE DATA
IN MEMORY

UPDATE EXECUTION STATE TO RECEIVED
ACCORDING TO DATA TYPE

COMPLETE UPDATE

# FIG. 26

Europäisches
Patentamt

European
Patent Office

Office européen
des brevets

# EUROPEAN SEARCH REPORT

Application Number

EP 15 15 3753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IREGUI ET AL: "Strategies for efficient virtual microscopy in pathological samples using JPEG2000", MICRON, PERGAMON, OXFORD, GB, vol. 38, no. 7, 10 August 2007 (2007-08-10), pages 700-713, XP022192455, * page 701, right-hand column, paragraph 4 * * page 703, right-hand column, paragraph 2 - page 704, left-hand column, paragraph 5 * | 1-15 | INV. G06T3/40 |
| X | MA ET AL: "Use of Autostitch for automatic stitching of microscope images", MICRON, PERGAMON, OXFORD, GB, vol. 38, no. 5, 16 March 2007 (2007-03-16), pages 492-499, XP005938505, * page 494, right-hand column, paragraph 4 - paragraph 5 * * page 497, right-hand column, last paragraph - page 498, left-hand column, paragraph 2; table 1 * | 1-15 | |
| A | CHOW S K ET AL: "Automated microscopy system for mosaic acquisition and processing", JOURNAL OF MICROSCOPY, BLACKWELL SCIENCE, GB, vol. 222, no. Pt 2, 1 May 2006 (2006-05-01), pages 76-84, XP002429639, * the whole document * | 1-15 | TECHNICAL FIELDS SEARCHED (IPC) G06T |
| A | WO 98/39728 A1 (BACUS RES LAB INC [US]) 11 September 1998 (1998-09-11) * the whole document * | 1-15 | |

-/--

The present search report has been drawn up for all claims

| Place of search | Date of completion of the search | Examiner |
|---|---|---|
| Munich | 6 July 2015 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 15 3753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 675 549 B1 (BROWER BERNARD V [US] ET AL) 9 March 2010 (2010-03-09) * the whole document * | 1-15 | |

-----

TECHNICAL FIELDS
SEARCHED     (IPC)

The present search report has been drawn up for all claims

| Place of search | Date of completion of the search | Examiner |
|---|---|---|
| Munich | 6 July 2015 | Pierfederici, A |

EPO FORM 1503 03.82 (P04C01)

**ANNEX TO THE EUROPEAN SEARCH REPORT
ON EUROPEAN PATENT APPLICATION NO.**

EP 15 15 3753

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2015

| Patent document cited in search report | | Publication date | Patent family member(s) | | Publication date |
|---|---|---|---|---|---|
| WO 9839728 | A1 | 11-09-1998 | AU | 6541298 A | 22-10-1998 |
| | | | AU | 6677098 A | 22-09-1998 |
| | | | DE | 69834564 T2 | 26-04-2007 |
| | | | DE | 69838297 T2 | 15-05-2008 |
| | | | EP | 1016031 A1 | 05-07-2000 |
| | | | EP | 1021786 A1 | 26-07-2000 |
| | | | EP | 1686533 A2 | 02-08-2006 |
| | | | EP | 2124188 A1 | 25-11-2009 |
| | | | JP | 4230542 B2 | 25-02-2009 |
| | | | JP | 4237264 B2 | 11-03-2009 |
| | | | JP | 4789989 B2 | 12-10-2011 |
| | | | JP | 2001519944 A | 23-10-2001 |
| | | | JP | 2002514319 A | 14-05-2002 |
| | | | JP | 2009037250 A | 19-02-2009 |
| | | | US | 6272235 B1 | 07-08-2001 |
| | | | US | 6522774 B1 | 18-02-2003 |
| | | | US | 2003123717 A1 | 03-07-2003 |
| | | | US | 2004236773 A1 | 25-11-2004 |
| | | | US | 2005254696 A1 | 17-11-2005 |
| | | | WO | 9839728 A1 | 11-09-1998 |
| | | | WO | 9844446 A1 | 08-10-1998 |
| US 7675549 | B1 | 09-03-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008511899 W
- WO 2006028439 A
- JP H1173494 B
- US 6259826 B1
- JP 2009048487 A